(19) Europäisches Patentamt
European Patent Office
Office européen des brevets

(11) **EP 3 301 470 A2**

(12) **EUROPEAN PATENT APPLICATION**

(43) Date of publication:
04.04.2018 Bulletin 2018/14

(51) Int Cl.:
*G01S 7/00* *(2006.01)*     *G01S 13/00* *(2006.01)*
*G01S 13/87* *(2006.01)*     *G01S 7/40* *(2006.01)*

(21) Application number: 17185429.2

(22) Date of filing: 09.08.2017

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: 29.09.2016 JP 2016191232
22.05.2017 JP 2017100823

(71) Applicant: **Panasonic Corporation
Osaka 571-8501 (JP)**

(72) Inventors:
• **YOMO, Hidekuni**
**Osaka-shi, Osaka 540-6207 (JP)**
• **MATSUOKA, Akihiko**
**Osaka-shi, Osaka 540-6207 (JP)**
• **IWASA, Kenta**
**Osaka-shi, Osaka 540-6207 (JP)**

(74) Representative: **Grünecker Patent- und
Rechtsanwälte
PartG mbB
Leopoldstraße 4
80802 München (DE)**

(54) **MULTI-RADAR SYSTEM**

(57)     A multi-radar system is configured such that radars A and B perform synchronization so that their transmission timings and frequency bands are substantially the same. For this reason, in a case where the radars A and B operate as bistatic radars, the radars A and B yield the same detection results from reflected waves from a place on a surface of a target T where the detection object regions of the radars A and B overlap. Therefore, the signal-to-noise ratio can be improved by synthesizing the target detection results obtained by the radars A and B operating as bistatic radars. This results in improved target detection performance.

FIG. 1

EP 3 301 470 A2

**Description**

BACKGROUND

1. Technical Field

The present disclosure relates to a multi-radar system including a plurality of radar apparatuses.

2. Description of the Related Art

Conventionally, a multi-radar system including a plurality of radar apparatuses has been proposed (see, for example, Japanese Patent No. 3643871). In this multi-radar system, adjacent radar apparatuses perform electronic beam scanning and have their phased-array antennas synchronized. At a timing when the adjacent radar apparatuses have such sensing object regions as to be operable as bistatic radars, they operate as bistatic radars, and at a timing where the adjacent radar apparatuses have such sensing object regions as to be hardly operable as bistatic radars, they operate as simple monostatic radars. The multi-radar system disclosed in Japanese Patent No. 3643871, for example when constituted by three or more radars, can secure a sufficient area of crossing of beams by synchronizing adjacent radars with each other, thus making it possible to effectively widen the detection region.
The technology disclosed in Japanese Patent No. 3643871 does give consideration to a wider detection region and improved detection performance but fails to give consideration to enhanced resolution. For this reason, there has been a demand for a multi-radar system that can achieve a balance between improved target detection performance and enhanced resolution.

SUMMARY

One non-limiting and exemplary embodiment facilitates providinga multi-radar system that can achieve a balance between improved target detection performance and enhanced resolution.
In one general aspect, the techniques disclosed here feature a multi-radar system including: a first radar apparatus including a first transmitter that transmits a first transmission signal, a first receiver that receives reflected-wave signals reflected by a target in a monostatic radar mode and a bistatic radar mode, respectively, and a first estimator that a direction-of-arrival estimation with reference to the reflected-wave signals thus received; a second radar apparatus including a second transmitter that transmits a second transmission signal, a second receiver that receives the reflected-wave signals reflected by the target in the monostatic radar mode and the bistatic radar mode, respectively, and a second estimator that performs the direction-of-arrival estimation with reference to the reflected-wave signals thus received; a synthesizer that synthesizes a result of the direction-of-arrival estimation in the bistatic radar mode of the first radar apparatus and a result of the direction-of-arrival estimation in the bistatic radar mode of the second radar apparatus; and an integrated processing apparatus including a shape estimator that estimate a shape of the target with reference to a result of the direction-of-arrival estimation in the monostatic radar mode of the first radar apparatus, a result of the direction-of-arrival estimation in the monostatic radar mode of the second radar apparatus, and an output from the synthesizer.
An aspect of the present disclosure makes it possible to provide a multi-radar system that can achieve a balance between improved target detection performance and enhanced resolution.
It should be noted that general or specific embodiments may be implemented as a system, a method, an integrated circuit, a computer program, a storage medium, or any selective combination thereof.
Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

BRIEF DESCRIPTION OF THE DRAWINGS

Fig. 1 schematically shows a relationship between a multi-radar system according to a first embodiment of the present disclosure and a target;
Fig. 2 shows a block configuration of the multi-radar system according to the first embodiment;
Fig. 3 shows an example configuration of a phase synthesizer;
Fig. 4 shows a block configuration of a multi-radar system according to a second embodiment;

Fig. 5 shows a block configuration of a multi-radar system according to a third embodiment;

Fig. 6 shows an example of an orthogonal coordinate system having its origin at the installation position of a radar A;

Fig. 7 illustrates a coordinate transformation in a case where the line of sight of the radar A does not coincide with the line of sight of a radar B;

Fig. 8 illustrates a coordinate transformation in a case where the line of sight of the radar A does not coincide with the line of sight of the radar B;

Fig. 9 is a conceptual diagram of a method for calculating a shift in the line of sight at the time of radar installation;

Fig. 10 is a block diagram showing internal components of the radars A and B;

Fig. 11 is a block diagram showing a second example configuration of internal components of the radars A and B;

Fig. 12 is a block diagram showing a third example configuration of internal components of the radars A and B;

Fig. 13 shows an example configuration of a phase rotator;

Fig. 14 is a block diagram showing a fourth example configuration of internal components of the radars A and B;

Fig. 15 shows an example of a timing chart showing a relationship between inter-radar multiplexing orthogonal codes and inter-stream multiplexing orthogonal codes; and

Fig. 16 is a block diagram showing a fifth example configuration of internal components of the radars A and B.

DETAILED DESCRIPTION

Prior to a detailed description of embodiments of the present disclosure, a radar apparatus is described.

A radar apparatus having a predetermined resolution can sense a target with satisfactory accuracy in a case where the size of the target is sufficiently large as compared with the resolution of the radar apparatus. However, such a radar apparatus has difficulty in sensing, with satisfactory accuracy, a target that is small as compared with the resolution. For this reason, there has been a demand for a radar apparatus that can sense, with satisfactory accuracy, even a target that is relatively small with respect to the resolution of the radar apparatus. Further, there has also been a demand for more accurate detection of the position, velocity, shape, and the like of a target that is relatively large with respect to the resolution of the radar apparatus (enhanced resolution).

It should be noted that a common radar apparatus faces a trade-off between improved detection performance and enhanced resolution and therefore has difficulty in achieving a balance between them. However, a multi-radar system including a plurality of radar apparatuses integrated is expected to achieve a balance between improved detection performance and enhanced resolution.

An example of a multi-radar system including a plurality of radar apparatuses is a technology disclosed, for example, in Japanese Patent No. 5631763. Based on the premise that signals received by each separate radar apparatus are reflections from the same target, Japanese Patent No. 5631763 discloses a technology for improving a signal-to-noise ratio by sharing an orthogonal coordinate system between a plurality of radars and integrating data so that integration can be performed for each component of distance, direction, relative velocity.

Further, another example of a multi-radar system is a technology disclosed, for example, in Japanese Patent No. 3460586. Based on the premise that the objects to be measured are rain clouds and the like, Japanese Patent No. 3460586 discloses a technology for achieving highly accurate wind speed estimation by assigning, to wind speed data measured by a plurality of radar apparatus, weights corresponding to measurement accuracy and then synthesizing the wind speed data.

Meanwhile, Kenshi Saho, Masao Masugi, "Velocity/shape estimation algorithm using tracking filter and data fusion of dual Doppler radar interferometers", International Journal of Computer and Electrical Engineering, Vol. 7, No. 5, pp. 283-295, Oct. 2015 discloses a technology for enhancing resolution with respect to a moving target by integrating output signals from a plurality of monostatic radars, smoothing the average location, the average velocity, and the like with a tracking filter, and then compensating for the trajectory of each of the output signals.

The technology disclosed in Japanese Patent No. 5631763 aims to integrate data by sharing an orthogonal coordinate system and employs an integration method based on the assumption that a target is sufficiently distant from a radar and reflections equivalently come from one point. Further, the technology disclosed in Japanese Patent No. 3460586 is based on the premise that the targets are rain clouds and the like. For this reason, the technologies disclosed in Japanese Patents Nos. 5631763 and 3460586 fail to give consideration, for example, to estimation of the size or shape of a target, i.e. to enhanced resolution.

Further, the technology disclosed in Kenshi Saho, Masao Masugi, "Velocity/shape estimation algorithm using tracking filter and data fusion of dual Doppler radar interferometers", International Journal of Computer and Electrical Engineering, Vol. 7, No. 5, pp. 283-295, Oct. 2015 focuses most of its attention on estimation of the shape of a target (enhanced resolution) in a case where the target is can be deemed to have a certain size and, as such, fails to make discussions regarding improved target sensing performance (signal-to-noise ratio).

A multi-radar system according to each of the embodiments of the present disclosure described below is intended to achieve a balance between improved target detection sensitivity and enhanced radar resolution.

Embodiment 1

Relationship between Target and Multi-radar System

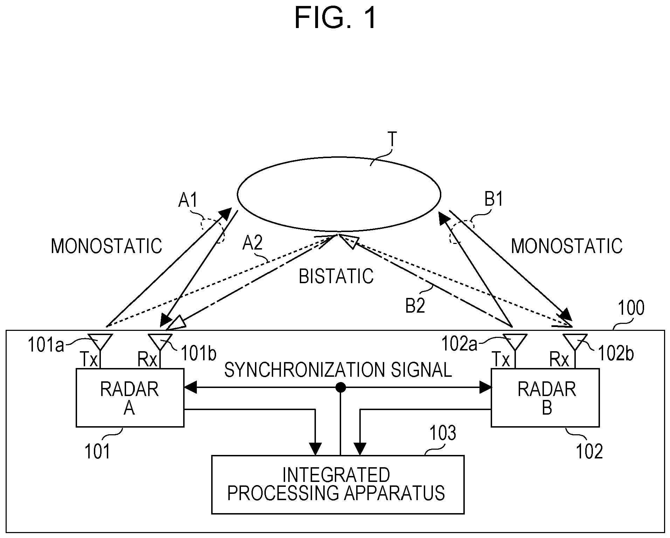

Fig. 1 schematically shows a relationship between a multi-radar system 100 according to a first embodiment of the present disclosure and a target T. As shown in Fig. 1, the multi-radar system 100 includes a radar A 101, a radar B 102, and an integrated processing apparatus 103.

The radar A 101 includes a transmitting antenna 101 a and a receiving antenna 101b, and the radar B 102 includes a transmitting antenna 102a and a receiving antenna 102b. For reduction in size of the radar apparatuses, it is desirable that the transmitting antennas 101 a and 102a and the receiving antennas 101b and 102b be located close to each other, respectively. For this reason, in the first embodiment, the transmitting antennas 101 a and 102a and the receiving antennas 101b and 102b are placed, for example, at a distance of approximately 30 λ or shorter from each other, respectively. It should be noted that λ is a wavelength that is determined by a carrier frequency. Since λ is approximately 3.75 mm in a case where the carrier frequency of a radar is 80 GHz, the interval between the transmitting and receiving antennas is approximately 10 cm. It should be noted that, in the first embodiment, it is assumed that the line of sight of the radar A 101 coincides with the line of sight of the radar B 102.

Further, in the first embodiment, it is assumed that the target T, which is the object to be detected, has a sufficiently large surface area as compared with the distance resolution of the radars A 101 and B 102. Specifically, since, in a case where the bandwidth (range of frequencies in which the gain is attenuated by 3 dB from the peak) of the radars A 101 and B 102 is 1 GHz, a distance resolution of approximately 15 cm is attained in theory, it is assumed that the target T is for example an object measuring approximately several tens of centimeters on a side.

Further, in the first embodiment, it is assumed that the target T, which is the object to be detected, is one that is moving with respect to the multi-radar system 100.

Each of the radars A 101 and B 102 simply operates as a monostatic radar and, furthermore, also operates as a bistatic radar that estimates the distance and direction of the target T by receiving electromagnetic waves transmitted from the other radar. It should be noted that the radars A 101 and B 102 operate, for example, in synchronization between the carrier frequency and the sampling clock frequencies of digital/analog converters and analog/digital converters.

In Fig. 1, the arrows A1 and B1 indicate the paths of electromagnetic waves that are observed in a case where the radars A 101 and B 102 operate as monostatic radars, respectively. The paths indicated by the arrows A1 and B1 include the paths of these of electromagnetic waves reflected by the target T which were scattered backward.

Meanwhile, in Fig. 1, the arrow A2 indicates the path of electromagnetic waves transmitted from the radar A 101, scatted forward by the target T, and received by the radar B 102, and the arrow B2 indicates the path of electromagnetic waves transmitted from the radar B 102, scatted forward by the target T, and received by the radar A 101. The paths of electromagnetic waves indicated by the arrows A2 and B2 are the paths of electromagnetic waves in a case where the radars A 101 and B 102 operate as bistatic radars.

Since, as mentioned above, the target T has a sufficiently large surface area as compared with the distance resolution of the radars A 101 and B 102, the radars A 101 and B 102 do not recognize the target T as a point. For this reason, the paths A1 and B1 of electromagnetic waves in a case where the radars A 101 and B 102 operate as bistatic radars are highly likely to be paths of reflections at different positions on a surface of the target T.

Meanwhile, in a case where the radars A 101 and B 102 are substantially the same in transmitting timing and frequency band, the paths A2 and B2 of electromagnetic waves in a case where the radars A 101 and B 102 operate as bistatic radars have their points of reflection at substantially the same positions on the target T, albeit opposite in direction of travel to each other. This is because the distances between the transmitting antennas 101 a and 102a and the receiving antennas 101b and 102b of the radars A 101 and B 102 are sufficiently shorter than those between the target T and the radar A 101 and between the target T and the radar B 102, respectively, and the paths A2 and B2 have a duality.

That is, it can be considered that the radars A 101 and B 102 operating as bistatic radars yield the same detection results from reflected waves from a place on the surface of the target T where the detection object regions of the radars A 101 and B 102 overlap.

With all these factors, the signal-to-noise ratio can be improved by synthesizing the target detection results obtained by the radars A 101 and B 102 operating as bistatic radars. Therefore, radars operating as bistatic radars have more improved target detection performance than a multi-radar system including a plurality of monostatic radars. Further, the increase in the number of points of reflection from the target advantageously results in enhanced accuracy.

The process for synthesizing the detection results obtained by the radars A 101 and B 102 operating as bistatic radars is performed by the integrated processing apparatus 103. The following gives a detailed description of the radar A 101, radar B 102, and integrated processing apparatus 103 of the multi-radar system 100 according to the first embodiment.

It should be noted that, in the following description, the radar A 101 or B 102 is sometimes described as being in a monostatic mode in a case where the radar A 101 or B 102 operates as a monostatic radar. Similarly, the radar A 101 or B 102 is sometimes described as being in a bistatic mode in a case where the radar A 101 or B 102 operates as a bistatic radar.

Block Configuration of Multi-radar System Including Integrated Processing Apparatus

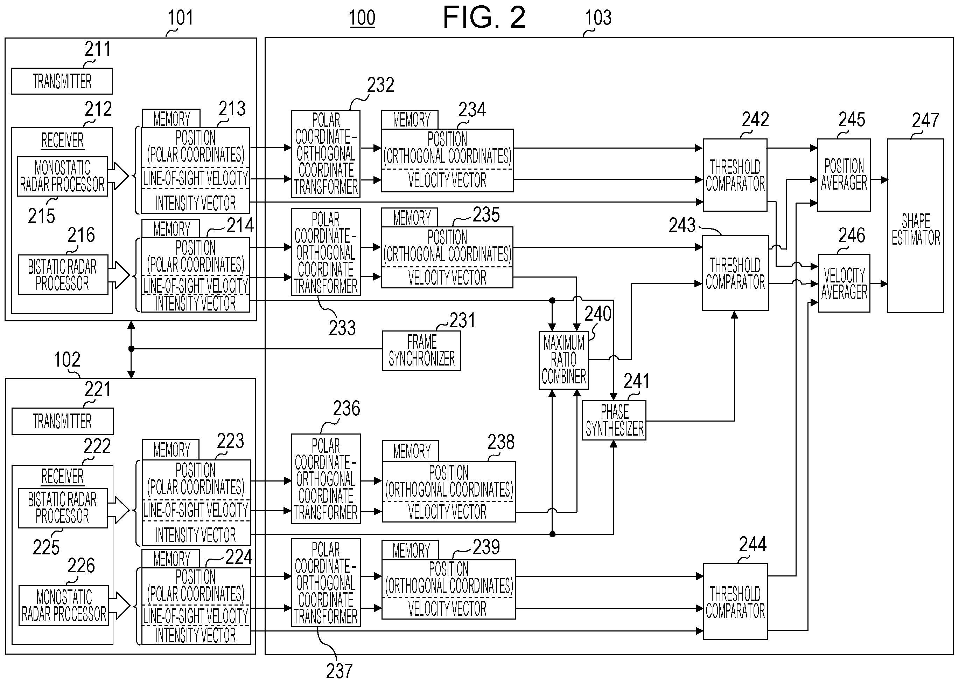

Fig. 2 shows a block configuration of the multi-radar system 100 according to the first embodiment. As shown in Fig. 2, the radar A 101 includes a transmitter 211, a receiver 212, a memory 213, and a memory 214. Further, the receiver 212 includes a monostatic radar processor 215 and a bistatic radar processor 216.

The monostatic radar processor 215 performs a direction-of-arrival (DOA) estimation process on the basis of reflected waves received in a case where the radar A 101 operates as a monostatic radar, and outputs a DOA estimation result to the memory 213. Further, the bistatic radar processor 216 performs a DOA estimation process on the basis of reflected waves received in a case where the radar A 101 operates in the bistatic mode, and outputs a DOA estimation result to the memory 214.

In the memory 213, for example, a DOA estimation result obtained in a case where the radar A 101 operates in the monostatic mode is stored. A DOA estimation result includes, for example, positional information at a point of detection of the target T within the detection object region, an reflection intensity (intensity vector) at each point of detection as determined by an angle, a relative velocity (line-of-sight speed information) at a point of detection with reference to the radar's line of sight, and the like. Similarly, in the memory 214, for example, a DOA estimation result obtained in a case where the radar A 101 operates in the bistatic mode is stored. As for the number of addresses of each of the memories, for example, in a case where the sensing object distance is 10 m and the distance is set in increments (degrees of accuracy) of 10 cm, the number of samples of the distance is 100, and in a case where the sensing object angle is $\pm 30$ degrees and the angle is set in increments (degrees of accuracy) of 1 degree, the number of samples of the angle is 61; therefore, $100 \times 61$ addresses are assigned.

Further, as shown in Fig. 2, the radar B 102 includes a transmitter 221, a receiver 222, a memory 223, and a memory 224. Further, the receiver 222 includes a bistatic radar processor 225 and a monostatic radar processor 226.

The bistatic radar processor 225 performs a direction-of-arrival (DOA) estimation process on the basis of reflected waves received in a case where the radar B 102 operates in the bistatic mode, and outputs a DOA estimation result to the memory 223. Further, the monostatic radar processor 226 performs a DOA estimation process on the basis of reflected waves received in a case where the radar B 102 operates in the monostatic mode, and outputs a DOA estimation result to the memory 224.

In the memory 223, a DOA estimation result based on reflected waves received in a case where the radar B 102 operates as a bistatic radar is stored. In the memory 224, a DOA estimation result based on reflected waves received in a case where the radar B 102 operates in the monostatic mode is stored.

Specifically, in each of the memories 223 and 224, positional information at a point of detection of the target T within the detection object region of the radar B 102, an intensity vector at each point of detection as determined by an angle, line-of-sight velocity information at a point of detection with reference to the radar's line of sight are written.

Moreover, the integrated processing apparatus 103 includes a frame synchronizer 231, polar coordinate-orthogonal coordinate transformers 232, 233, 236, and 237, memories 234, 235, 238, and 239, a maximum ratio combiner 240, a phase synthesizer 241, threshold comparators 242, 243, and 244, a position averager 245, a velocity averager 246, and a shape estimator 247.

The frame synchronizer 231 outputs a signal that synchronizes the transmission timings of the radars A 101 and B 102. The frame synchronizer 231 is an example of a first synchronizer.

The polar coordinate-orthogonal coordinate transformer 232 transforms, into orthogonal coordinates, the positional information and line-of-sight velocity information that are stored in the form of polar coordinates in the memory 213 of the radar A 101. The memory 234 stores the positional information and velocity vector transformed into orthogonal coordinates as obtained by monostatic radar processing of the radar A 101.

The polar coordinate-orthogonal coordinate transformer 233 transforms, into orthogonal coordinates, the positional information and line-of-sight velocity information of the memory 214 of the radar A 101. The memory 235 stores the positional information and velocity vector obtained by bistatic radar processing of the radar A 101 as transformed into orthogonal coordinates.

The polar coordinate-orthogonal coordinate transformer 236 transforms, into orthogonal coordinates, the positional information and line-of-sight velocity information that are stored in the memory 223 of the radar B 102. The memory 238 stores the positional information and velocity vector obtained by bistatic radar processing of the radar B 102 as transformed into orthogonal coordinates.

The polar coordinate-orthogonal coordinate transformer 237 transforms, into orthogonal coordinates, the positional information and line-of-sight velocity information that are stored in the memory 224 of the radar B 102. The memory 239 stores the positional information and velocity vector obtained by monostatic radar processing of the radar B 102 as transformed into orthogonal coordinates. It should be noted that the polar coordinate-orthogonal coordinate transformers 232, 233, 236, and 237 are an example of a plurality of coordinate transformers.

Those pieces of positional information at the points of detection of the target T which are stored in the memories 213, 214, 223, and 224 of the radars A 101 and B 102 are indicated by relative distances and angles from the origins in polar coordinate systems having their origins at the installation positions of the respective radars. That is, the pieces of positional information stored in the respective memories 213, 214, 223, and 224 have their origins at different positions. In order to synthesize detection results of the bistatic mode, it is necessary to align the positions of the origins of these pieces of positional information.

In polar representations through which the pieces of positional information are indicated by distances and angles from the origins, a complex calculation is required for alignment of the positions of the origins. Therefore, in the first embodiment of the present disclosure, the polar-coordinate-orthogonal coordinate transformers 232 and 233 perform transformations into orthogonal coordinates having their origins at the installation position of the radar A 101. The polar-coordinate-orthogonal coordinate transformers 236 and 237 of the radar B 102 perform similar processes. It should be noted that the method by which the polar-coordinate-orthogonal coordinate transformers 232, 233, 236, and 237 perform transformations into orthogonal coordinate systems will be described in detail later.

The maximum ratio combiner 240 synthesizes the velocity vectors according to the power ratio between the intensity vectors obtained by bistatic radar processing of the radars A 101 and B 102. It should be noted that the maximum ratio combiner 240 is an example of a first synthesizer of the present disclosure.

Note here that the velocity vectors detected in the bistatic mode of the radars A 101 and B 102 match in theory when transformed into orthogonal coordinates. However, in actuality, there is a case where they do not match due to the influence of noise or the like. To address this problem, the maximum ratio combiner 240 calculates a more accurate velocity vector by performing maximum ratio combining according to the ratio between intensities detected at a position. A formula of maximum ratio combining by the maximum ratio combiner 240 will be described later.

It should be noted that although the present embodiment employs maximum ratio combining as a method for synthesizing the velocity vectors, the present disclosure is not limited to this. As the method for synthesizing the velocity vector, for example, gain synthesis such as simple addition of the velocity vectors may be performed. Alternatively, it is possible to, instead of synthesizing the velocity vectors, employ a method by which to simply select and output the velocity vector with the greater intensity vector.

The phase synthesizer 241 performs synthesis with phase matching between the intensity vectors obtained by bistatic radar processing of the radars A 101 and B 102. The phase synthesizer 241 is an example of a second synthesizer.

Note here that the intensity vectors detected by DOA estimation in the bistatic mode of the radars A 101 and B 102 are complex signals, and the phases of the intensity vectors do not necessarily match between the radars A 101 and B 102. For this reason, it is desirable that the influence of noise or the like be suppressed by synthesis with phase matching. Note, however, that, as for range bins in which the target T is not present, they are components of noise; therefore, the noise components are amplified in the case of synthesis with phase matching.

To address this problem, the multi-radar system 100 according to the first embodiment is configured such that the phase synthesizer 241 determines whether intensity vector sequences including range bins in front of and behind the objects to be synthesized are similar between the radars A 101 and B 102, performs synthesis with phase matching in a case where they are similar or performs synthesis without phase adjustment in a case where they are not similar, and thereby reduces noise by averaging.

The similarity determination is made by calculating, for each of the radars A 101 and B 102, an intensity vector sequence including range bins in front of and behind the objects to be synthesized, finding out the electric power of a complex signal obtained by performing a cross-correlation operation, and determining whether the electric power is greater or less than a predetermined threshold. That is, the fact that not only range bins in which the target T is present but also adjacent range bins are brought up to commensurate levels by the presence of the target T is utilized. The phase synthesizer 241 will be described in detail later.

It should be noted that although the present embodiment employs phase synthesis as a method for synthesizing the intensity vectors, the present disclosure is not limited to this. As the method for synthesizing the intensity vectors, for example, a method by which to add the absolute values of vectors or the like may be employed. Alternatively, it is possible to, instead of synthesizing the intensity vectors, employ a method by which to simply select and output the greater intensity vector.

The threshold comparator 242 outputs the positional information and the velocity vector to the subsequent stage in a case where the intensity vector obtained by the radar A 101 is greater than a predetermined threshold. The threshold comparator 243 outputs the positional information obtained by the bistatic radar processor 216 of the radar A 101 to the subsequent stage in a case where the output vector of the phase synthesizer 241 is greater than a predetermined threshold.

The threshold comparator 244 outputs the positional information and the velocity vector to the subsequent stage in a case where the intensity vector obtained by the radar B 102 is greater than a predetermined threshold.

In this way, the threshold comparators 242, 243, and 244 output the inputted positional information and velocity vectors to the subsequent stages in a case where the inputted intensity vectors are greater in magnitude than the predetermined thresholds.

The position averager 245 calculates the average position of three points of reflection on the basis of the positional information outputted from the threshold comparators 242, 243, and 244. The velocity averager 246 averages, on the basis of the velocity vectors outputted from the threshold comparators 242, 243, and 244, velocity vectors obtained from the three points of reflection.

The shape estimator 247 estimates the shape of the target T by compensating for the trajectory of the position with the velocity vector on the basis of the outputs from the position averager 245 and the velocity averager 246. Note here that the shape estimator 247 may have a tracking filter function of calculating an estimated position and an estimated velocity vector smoothed by an $\alpha$-$\beta$-$\gamma$ filter or the like, for example as described in Kenshi Saho, Masao Masugi, "Velocity/shape estimation algorithm using tracking filter and data fusion of dual Doppler radar interferometers", International Journal of Computer and Electrical Engineering, Vol. 7, No. 5, pp. 283-295, Oct. 2015. This makes it possible to reduce a shift in trajectory caused by the influence of noise or the like.

Example Configuration of Phase Synthesizer

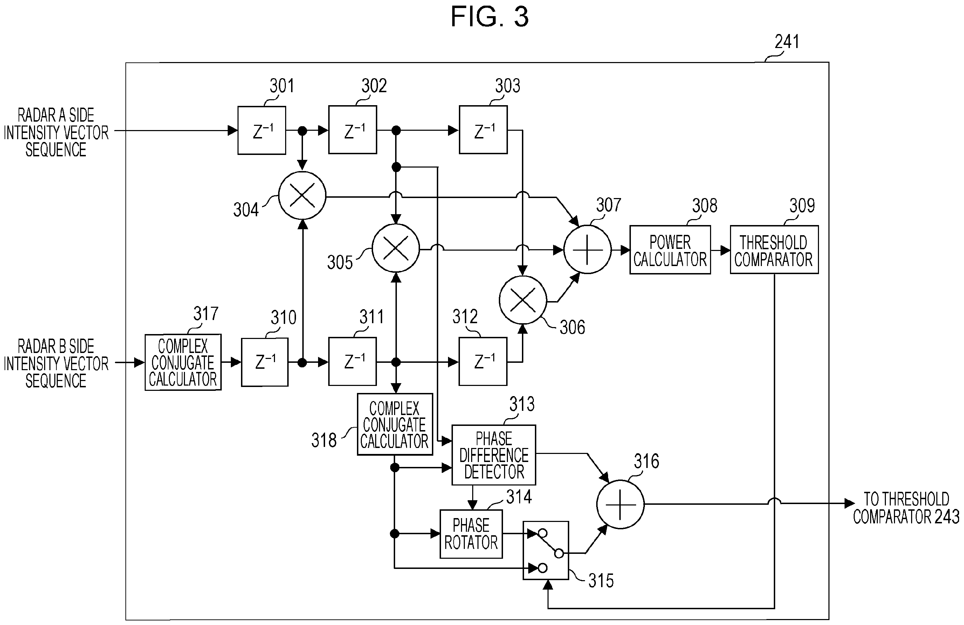

Fig. 3 shows an example configuration of the phase synthesizer 241. As shown in Fig. 3, the phase synthesizer 241 includes delayers 301, 302, 303, 310, 311, and 312, complex multipliers 304, 305, and 306, complex adders 307 and 316, a power calculator 308, a threshold comparator 309, a phase difference detector 313, a phase rotator 314, a switcher 315, and complex conjugate calculators 317 and 318.

The delayers 301, 302, and 303 delay the intensity vector sequence of the radar A 101 thus inputted. The delayers 310, 311, and 312 delay the complex conjugate of the intensity vector sequence of the radar B 102 calculated by the complex conjugate calculator 317. Then, the complex multipliers 304, 305, and 306 calculate inner products for each separate amount of delay.

The power calculator 308 calculates electric power on the basis of a value obtained by the complex adder 307 adding the inner products thus calculated. The threshold comparator 309 determines whether the electric power thus calculated is greater or less than a predetermined threshold. In a case where the electric power is greater than the predetermined threshold, the threshold comparator 309 determines that the range bins are ones in which the target T is present, and causes the complex adder 316 to synthesize the intensity vector of the radar A 101 and the output from the phase rotator 314 of the radar B 102. Note here that the phase difference detector 313 detects the average phase difference of all branches of the radar A 101, thereby making it possible to better reduce the influence of noise than in a case of detecting phase differences independently for each separate branch.

It should be noted that although, in the description of the phase synthesizer 241 above, phase synthesis is performed using an intensity vector sequence including range bins, the present disclosure is not limited to this. For example, the phase synthesizer 241 may perform a two-dimensional cross-correlation operation utilizing signals subjected to frequency-domain analysis using the after-mentioned short-time Fourier transform (STFT). In a case where the multi-radar system 100 including the radars A 101 and B 102 and the target T are moving relative to each other, Doppler frequency shifts of the target T as detected in the bistatic mode match between the radars A 101 and B 102; therefore, by performing a cross-correlation operation with signals of the same frequency bin, a correlation value at a commensurate level can be obtained by the presence of the target T.

Working Effects

As described above, the multi-radar system 100 according to the first embodiment is configured such that the radars A 101 and B 102 perform synchronization so that their transmission timings and frequency bands are substantially the same. For this reason, in a case where the radars A 101 and B 102 operate as bistatic radars, the radars A 101 and B 102 yield the same detection results from reflected waves from a place on the surface of the target T where the detection object regions of the radars A 101 and B 102 overlap. Therefore, the signal-to-noise ratio can be improved by synthesizing the target detection results obtained by the radars A 101 and B 102 operating as bistatic radars. This results in improved target detection performance. Moreover, the increase in the number of points of reflection from the target makes it possible to achieve enhanced resolution. This makes it possible to achieve a multi-radar system that achieves a balance between enhanced resolution and improved detection accuracy.

Second Embodiment

The first embodiment described above has described a case where the lines of sight of the radars A 101 and B 102 coincide with each other. A second embodiment described below describes a case where the lines of sight of the radars A 101 and B 102 do not coincide with each other.

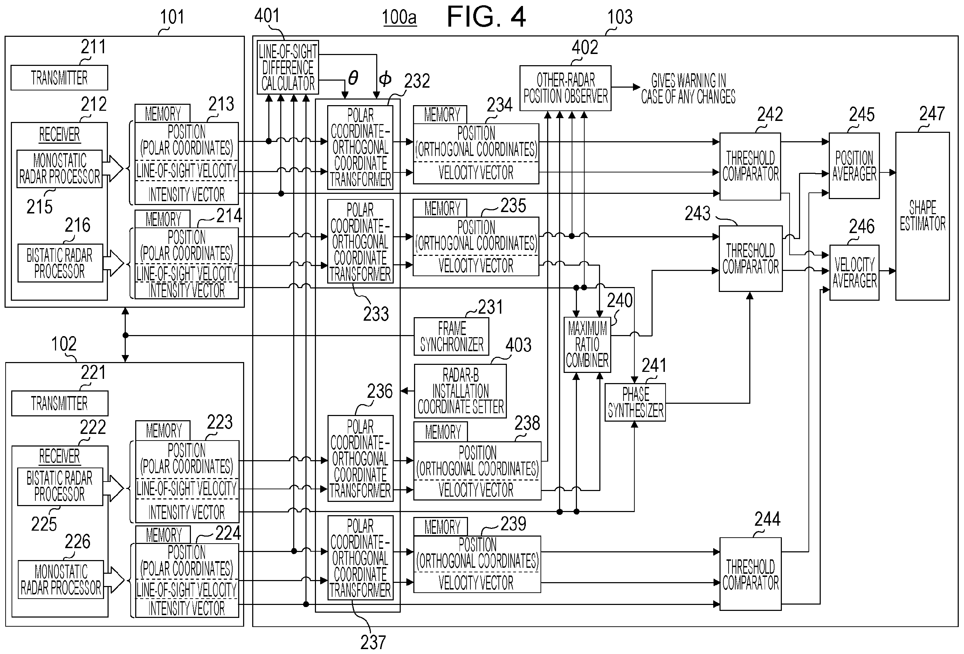

Fig. 4 shows a block configuration of a multi-radar system 100a according to the second embodiment. As shown in Fig. 4, the multi-radar system 100a according to the second embodiment further includes a line-of-sight difference calculator 401, an other-radar position observer 402, a radar-B installation coordinate setter 403 in addition to the components of the multi-radar system 100 according to the first embodiment shown in Fig. 2.

The line-of-sight difference calculator 401 calculates shifts in the lines of sight of the radars A 101 and B 102 (a horizontal shift being hereinafter referred to as "θ", a vertical shift being hereinafter referred to as "φ"). Shifts in the lines of sight may be calculated, for example, by calculating shifts in the lines of sight at the time of operation by placing a tentative target in a common detection region of the radars A 101 and B 102 at the time of installation of the radars A 101 and B 102, storing in advance the values of initial shifts in the lines of sight as calculated by detecting the tentative target, and using positional information and intensity vectors detected by the radars A 101 and B 102 at the time of radar operation. The method for calculating shifts in the lines of sight will be described later.

Moreover, in transforming, into orthogonal coordinates, the positional information and line-of-sight relative velocity information stored in the form of polar coordinates in the memories 213, 214, 223, and 224 of the radars A 101 and B 102, the polar-coordinate-orthogonal coordinate transformers 232, 233, 236, and 237 transform the positional information from polar representations into orthogonal representations in consideration of the shifts in the lines of sight as calculated by the line-of-sight difference calculator 401.

Similarly, the polar-coordinate-orthogonal coordinate transformers 232, 233, 236, and 237 transform relative velocities in the lines of sight into orthogonal representations and resolve them into orthogonal three-dimensional velocity vectors. Since the transformation into orthogonal coordinates requires information regarding the installation position coordinates of the radar B 102, the polar-coordinate-orthogonal coordinate transformers 232, 233, 236, and 237 read out and use information regarding the installation position coordinates of the radar B 102 as stored in advance in the radar-B installation position coordinate setter 403.

The other-radar position observer 402 stores the positions of the radars A 101 and B 102 as initial installation positions in advance, observes the positions of the radars A 101 and B 102 at the time of radar operation, and gives a warning in case of any changes from the initial positions. The other-radar position observer 402 is provided for the following reasons.

The transformation of coordinate systems by the polar-coordinate-orthogonal coordinate transformers 232, 233, 236, and 237 is performed on the premise that once the radars A 101 and B 102 are installed, there are no changes in their positions or lines of sight and there are no changes in the shifts θ and φ in the lines of sight. However, in case of application of a mechanical force to an installation jig or any extreme changes in temperature, the installation jig may deform to cause changes in the lines of sight.

As mentioned above, the radars A 101 and B 102 are installed in places close to each other so that their respective detection object regions overlap. Therefore, at the time of radar operation, radar transmission waves from the radar A 101 arrive directly at the radar B 102 without being reflected by the target or radar transmission waves from the radar B 102 arrive directly at the radar A 101 without being reflected by the target.

Note here that in a case where there is no reflecting object around the radar system, the most closely-located peaks of a delay profile that is obtained by bistatic processing correspond to the distance at which the other radar is installed. This range bin remains unchanged unless the installation jig deforms to cause changes in the installation positions or lines of sight of the radars A 101 and B 102. Further, a result of DOA estimation performed on a signal of this range bin similarly remains unchanged.

That is, the other-radar position observer 402 acquires the position of the radar B 102 as observed by the radar A 101 and the position of the radar A 101 as observed by the radar B 102 at the time of radar operation and gives a warning in a case where the positions are different from those stored at the time of installation, thereby notifying that coordinate transformations have not been accurately performed.

As described above, the multi-radar system 100a according to the second embodiment is configured such that the line-of-sight difference calculator 401 calculates shifts in the lines of sight of the radars A 101 and B 102 and the polar-coordinate-orthogonal coordinate transformers 232, 233, 236, and 237 perform coordinate transformation in consideration of the shifts in the lines of sight thus calculated. This allows the multi-radar system 100a according to the second embodiment to, even in a case where shifts has occurred in the lines of sight of the radars A 101 and B 102, operate without being affected by the shifts.

Third Embodiment

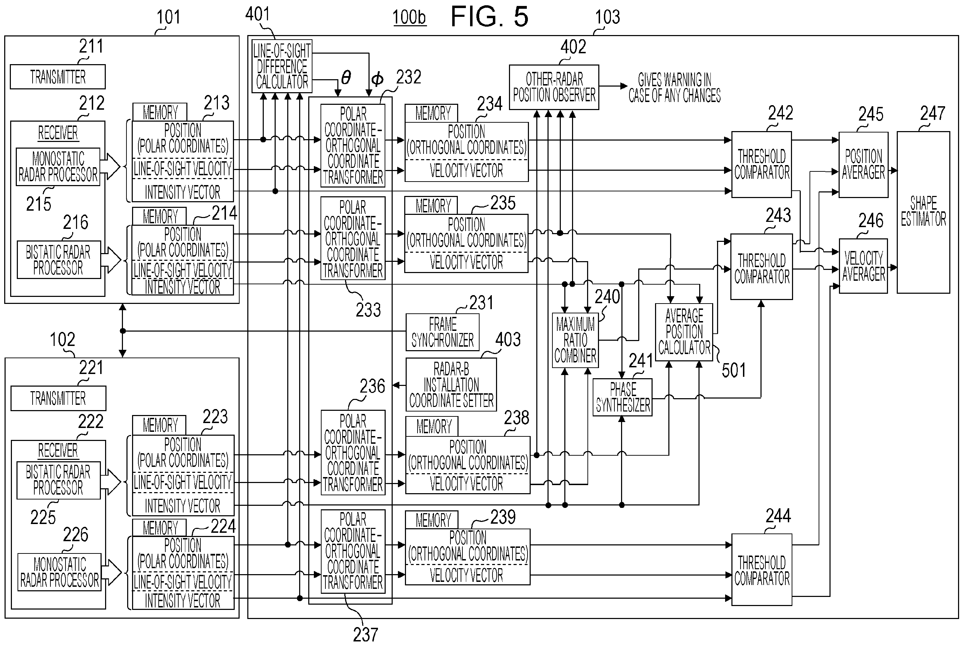

A multi-radar system 100b according to a third embodiment is configured to further include an average position calculator 501 as a further preferred example of the multi-radar system 100a according to the second embodiment. Fig. 5 shows a block configuration of the multi-radar system 100b according to the third embodiment.

The average position calculator 501 calculates an intensity-based average position on the basis of the positional information of the orthogonal coordinates of the radar A 101, the intensity vector of the radar A 101, the positional information of the orthogonal coordinates of the radar B 102, and the intensity vector of the radar B 102. Then, in a case where the output (intensity vector) from the phase synthesizer 241 is greater than the predetermined threshold, the threshold comparator 243 outputs the average position calculated by the average position calculator 501 to the position averager 245 as positional information. With this, in a case where relationships between positions and intensities observed in the bistatic mode differ between the radars A 101 and B 102 due to the influence of noise or the like even after orthogonal transformations, the relationships between positions and intensities can be corrected.

The following is an example of a method by which the average position calculator 501 calculates an average position. Let it be assumed that in a case where the target T is detected in the bistatic mode of the radar A 101, the position coordinates (three-dimensional) corresponding to the address i of the memory 235 are $(x_{AB}(i), y_{AB}(i), z_{AB}(i))$ and the intensity corresponding to the address i of the memory 235 is $P_{AB}(i)$, that, similarly, in a case where the target T is detected in the bistatic mode of the radar B 102, the position coordinates (three-dimensional) corresponding to the address j of the memory 238 are $(x_{BA}(j), y_{BA}(j), z_{BA}(j))$ and the intensity corresponding to the address j of the memory 238 is $P_{BA}(j)$, and that there is one point of reflection in the sensing region. In this case, the average position can be calculated according to Formula (1):

$$\left( \frac{\sum_i P_{AB}(i)x_{AB}(i)+\sum_j P_{BA}(j)x_{BA}(j)}{\sum_i P_{AB}(i)+\sum_j P_{BA}(j)}, \frac{\sum_i P_{AB}(i)y_{AB}(i)+\sum_j P_{BA}(j)y_{BA}(j)}{\sum_i P_{AB}(i)+\sum_j P_{BA}(j)}, \frac{\sum_i P_{AB}(i)z_{AB}(i)+\sum_j P_{BA}(j)z_{BA}(j)}{\sum_i P_{AB}(i)+\sum_j P_{BA}(j)} \right) \quad (1)$$

It should be noted that in a case where there are a plurality of points of reflection, the address j of the memory 238 of the radar B 102 is appropriately set, with a limit imposed on the address i of the memory 235 of the radar A 101 that corresponds to a region where there can be deemed to be one point of reflection.

As described above, the multi-radar system 100b according to the third embodiment is configured such that the average position calculator 501 calculates an intensity-based average position on the basis of the positional information of the orthogonal coordinates of the radar A 101, the intensity vector of the radar A 101, the positional information of the orthogonal coordinates of the radar B 102, and the intensity vector of the radar B 102. Then, in a case where the output (intensity vector) from the phase synthesizer 241 is greater than the predetermined threshold, the threshold comparator 243 outputs the average position calculated by the average position calculator 501 to the position averager 245 as positional information. With this, in a case where relationships between positions and intensities observed in the bistatic mode differ between the radars A 101 and B 102 due to the influence of noise or the like even after orthogonal transformations, the relationships between positions and intensities can be corrected.

Method for Transformation from Polar Coordinate System into Orthogonal Coordinate System

The following describes a method by which the polar-coordinate-orthogonal coordinate transformers 232, 233, 236, and 237 perform transformations from polar coordinate systems into orthogonal coordinate systems in the multi-radar systems 100, 100a, and 100b according to the first to third embodiments described above.

The following description is based on the premise that the radars A 101 and B 102, which are objects of coordinate transformation, can identify vertical positions as well as horizontal positions.

The first embodiment described above assumes a case where the lines of sight of the radars A 101 and B 102 coincide with each other.

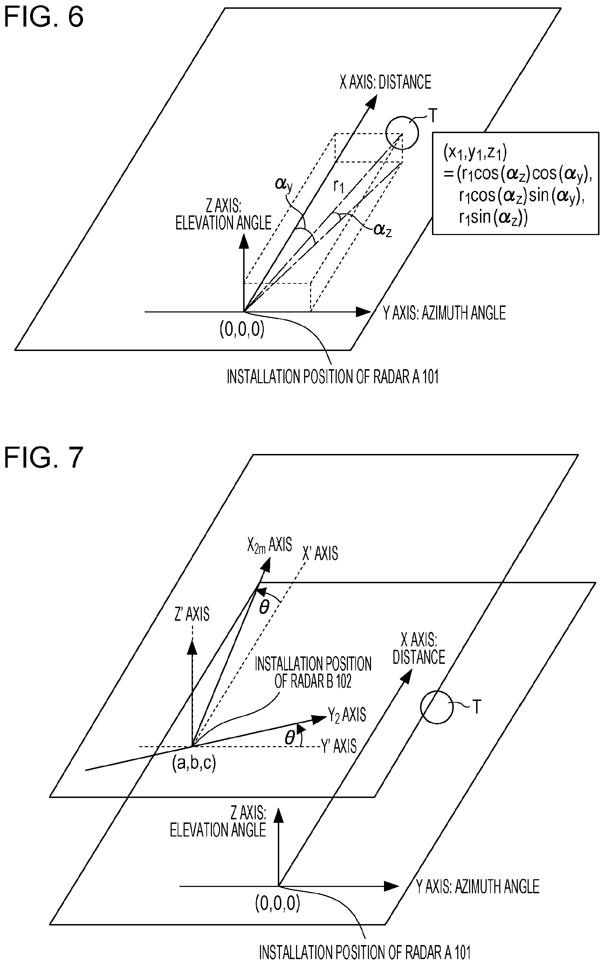

Fig. 6 shows an example of an orthogonal coordinate system having its origin at the installation position of the radar A 101. The position $(x_1, y_1, z_1)$ of the target T on the orthogonal coordinate system of the radar A 101 is expressed by Formula (2) below, where $r_1$ is the distance to the target T as detected by the radar A 101, $\alpha_y$ is the azimuth angle (horizontal angle) of the target T with respect to the radar A 101, and $\alpha_z$ is the elevation angle (vertical angle) of the target T with respect to the radar A 101 (see Fig. 6). Note here that the orthogonal axes are an X axis representing a distance direction, a Y axis representing an azimuth angle direction, and a Z axis representing an elevation angle direction.

$$(x_1, y_1, z_1) = (r_1\cos(\alpha_z)\cos(\alpha_y), r_1\cos(\alpha_z)\sin(\alpha_y), r_1\sin(\alpha_z)) \quad (2)$$

Although not illustrated, the position $(x_2, y_2, z_2)$ of the target T on the orthogonal coordinate system of the radar B 102 is expressed by Formula (3) below, where $r_2$ is the distance to the target T as detected by the radar B 102, $\beta_y$ is the azimuth angle (horizontal angle), and $\beta_z$ is the elevation angle (vertical angle).

$$(x_2, y_2, z_2) = (r_2\cos(\beta_z)\cos(\beta_y), r_2\cos(\beta_z)\sin(\beta_y), r_2\sin(\beta_z)) \quad (3)$$

In a case where the installation position of the radar B 102 in the orthogonal coordinate system of the radar A 101 is (a, b, c) and the lines of sight (front directions) of the radars A 101 and B 102 coincide with each other, the detection position of the target T by the radar B 102 in the orthogonal coordinate system of the radar A 101 is expressed according to Formula (4):

$$(x_2+a, y_2+b, z_2+c) \quad (4)$$

On the other hand, in a case where the lines of sight of the radars A 101 and B 102 do not coincide with each other as in the case of the second embodiment described above, a transformation is needed which reflects the shifts in the lines of sight. Let it be assumed here that both the radars A 101 and B 102 are installed so as not be horizontally inclined.

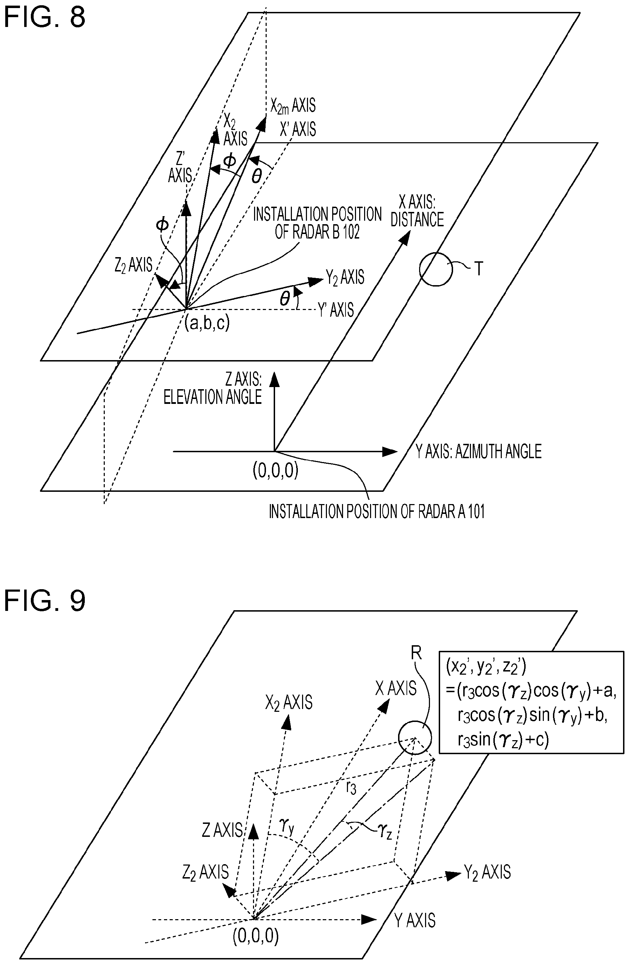

Figs. 7 and 8 each illustrate a coordinate transformation in a case where the lines of sight of the radar A 101 and B 102 do not coincide with each other. In Fig. 7, assuming that the origin is the installation position of the radar B 102 and the X', Y', and Z' axes are axes that are parallel to the three-dimensional orthogonal axes of the radar A 101, respectively, the line of sight of the radar B 102 can be found out in the following manner. First, with the Z' axis as the central axis, the X' and Y' axes are rotated by the angle $\theta$ in a horizontal direction within the X'-Y' plane. Note here that the orthogonal axes thus rotated by the angle $\theta$ are the $X_{2m}$ and $Y_2$ axes. Then, as shown in Fig. 8, it is assumed that the $X_2$ axis, which is represented by three-dimensional orthogonal axes obtained by rotating the $X_{2m}$ and Z' axes by the angle $\varphi$ in a vertical direction within the $X_{2m}$-Z' plane with the $Y_2$ axis as the central axis, is the line of sight of the radar B 102.

It should be noted that a transformation into the orthogonal coordinates of the radar A 101 can be done simply by making rotations in a direction opposite to that described above. Making a ($-\theta$) rotation of the orthogonal coordinate system is equivalent to making a ($+\theta$) rotation of the position of the target T detected. That is, the orthogonal coordinates $(x_2, y_2, z_2)$ of the target T as detected by the radar B 102 are rotated by ($+\theta$) and then rotated by ($+\varphi$) by a rotation matrix as indicated by Formula (5) below, whereby positional information transformed into the orthogonal coordinates of the radar A 101 can be calculated.

$$
\begin{pmatrix} x_r \\ y_r \\ z_r \end{pmatrix} = \begin{pmatrix} \cos\varphi & 0 & -\sin\varphi \\ 0 & 1 & 0 \\ \sin\varphi & 0 & \cos\varphi \end{pmatrix} \begin{pmatrix} \cos\theta & -\sin\theta & 0 \\ \sin\theta & \cos\theta & 0 \\ 0 & 0 & 1 \end{pmatrix} \begin{pmatrix} x_2 \\ y_2 \\ z_2 \end{pmatrix} =
$$

$$
\begin{pmatrix} \cos\varphi\cos\theta x_2 - \cos\varphi\sin\theta y_2 - \sin\varphi z_2 \\ \sin\theta x_2 + \cos\theta y_2 \\ \sin\varphi\cos\theta x_2 - \sin\varphi\sin\theta y_2 + \cos\varphi z_2 \end{pmatrix} =
$$

$$
\begin{pmatrix} r_2\left(\cos\varphi\cos\theta\cos\beta_z\cos\beta_y - \cos\varphi\sin\theta\cos\beta_z\sin\beta_y - \sin\varphi\sin\beta_z\right) \\ r_2\left(\sin\theta\cos\beta_z\cos\beta_y + \cos\theta\cos\beta_z\sin\beta_y\right) \\ r_2\left(\sin\varphi\cos\theta\cos\beta_z\cos\beta_y - \sin\varphi\sin\theta\cos\beta_z\sin\beta_y + \cos\varphi\sin\beta_y\right) \end{pmatrix} \quad (5)
$$

On the basis of the positional information transformed into the orthogonal coordinates of the radar A 101 thus calculated and information regarding the installation position of the radar B 102 as acquired from the radar-B installation coordinate setter 403, the polar-coordinate-orthogonal coordinate transformers 232, 233, 236, and 237 calculate, according to Formula (6) below, the position $(x_{2r}, y_{2r}, z_{2r})$ of the target T as detected by the radar B 102 in the orthogonal coordinate system of the radar A 101.

$$
\begin{pmatrix} x_{2r} \\ y_{2r} \\ z_{2r} \end{pmatrix} = \begin{pmatrix} r_2\left(\cos\varphi\cos\theta\cos\beta_z\cos\beta_y - \cos\varphi\sin\theta\cos\beta_z\sin\beta_y - \sin\varphi\sin\beta_z\right) + a \\ r_2\left(\sin\theta\cos\beta_z\cos\beta_y + \cos\theta\cos\beta_z\sin\beta_y\right) + b \\ r_2\left(\sin\varphi\cos\theta\cos\beta_z\cos\beta_y - \sin\varphi\sin\theta\cos\beta_z\sin\beta_y + \cos\varphi\sin\beta_y\right) + c \end{pmatrix} \quad (6)
$$

Furthermore, the polar-coordinate-orthogonal coordinate transformers 232, 233, 236, and 237 also transform

a velocity $v_2$ observed by the radar B 102 into the orthogonal coordinates of the radar A 101. It is desirable that the velocity $v_2$ observed by the radar B 102 be mapped over the line of sight in advance. The line-of-sight velocity $v_{2e}$ can be calculated according to Formula (7) below, where $\alpha_y$ is the azimuth angle (horizontal angle) detected and $\alpha_z$ is the elevation angle (vertical angle) detected.

$$v_{2e} = v_2 \cos(\alpha_y) \cos(\alpha_z) \quad (7)$$

In the case of a velocity, there is no need for a transformation attributed to the installation position of a radar. The velocity of the target T as detected by the radar B 102 in the orthogonal coordinate system of the radar A 101 can be calculated according to Formula (8):

$$\begin{pmatrix} v_{x2} \\ v_{y2} \\ v_{z2} \end{pmatrix} = \begin{pmatrix} v_2\cos(\alpha_y)\cos(\alpha_z)\left(\cos\varphi\cos\theta\cos\beta_z\cos\beta_y - \cos\varphi\sin\theta\cos\beta_z\sin\beta_y - \sin\varphi\sin\beta_z\right) \\ v_2\cos(\alpha_y)\cos(\alpha_z)\left(\sin\theta\cos\beta_z\cos\beta_y + \cos\theta\cos\beta_z\sin\beta_y\right) \\ v_2\cos(\alpha_y)\cos(\alpha_z)\left(\sin\varphi\cos\theta\cos\beta_z\cos\beta_y - \sin\varphi\sin\theta\cos\beta_z\sin\beta_y + \cos\varphi\sin\beta_y\right) \end{pmatrix} (8)$$

Method for Calculation of Maximum Ratio Combining

The following describes a method of maximum ratio combining in the maximum ratio combiner 240. Let it be assumed that when the target T is detected in the bistatic mode of the radar A 101, the velocity obtained by transforming the line-of-sight velocity of the target T into orthogonal coordinates is $(v_{x1}(i), v_{y1}(i), v_{z1}(i))$ and the intensity is $P_{AB}(i)$ in the address i of the memory 235 and that, similarly, when the target T is detected in the bistatic mode of the radar B 102, the velocity obtained by transforming the line-of-sight velocity of the target T into orthogonal coordinates is $(v_{x2}(j), v_{y2}(j), v_{z2}(j))$ and the intensity is $P_{BA}(j)$ in the address j of the memory 238. Then, when it is assumed that there is one point of reflection in the sensing region, the velocity in the orthogonal coordinate system after maximum ratio combining can be calculated according to Formula (9):

$$\left( \frac{\sum_i P_{AB}(i)v_{x1}(i) + \sum_j P_{BA}(j)v_{x2}(j)}{\sum_i P_{AB}(i) + \sum_j P_{BA}(j)} , \frac{\sum_i P_{AB}(i)v_{y1}(i) + \sum_j P_{BA}(j)v_{y2}(j)}{\sum_i P_{AB}(i) + \sum_j P_{BA}(j)} , \frac{\sum_i P_{AB}(i)v_{z1}(i) + \sum_j P_{BA}(j)v_{z2}(j)}{\sum_i P_{AB}(i) + \sum_j P_{BA}(j)} \right) \quad (9)$$

It should be noted that in a case where there are a plurality of points of reflection, the maximum ratio combining may be calculated by appropriately setting the address i of the memory 238 of the radar B 102, with a limit imposed on the address i of the memory 235 of the radar A 101 that corresponds to a region where there can be deemed to be one point of reflection. The orthogonal coordinates of the position corresponding to the limited address i is transformed back into the polar coordinate system of the radar B 102 on the basis of the line of sight and installation position of the radar B 102, whereby the address j of the memory 238 of the radar B 102 is fixed. It should be noted that since a correspondence relationship between the addresses i and j is uniquely fixed at the time of radar installation, it is also suitably calculated and tabulated in a reference table in advance.

Method for Calculating Shifts in Lines of Sight

In the second embodiment described above, the line-of-sight difference calculator 401 calculates shifts (angles $\theta$ and $\varphi$) in the lines of sight of the radars A 101 and B 102 with reference to positional information and intensity vectors as detected by the radars A 101 and B 102 at the time of radar operation. An example of a method for calculating shifts in the lines of sight is a method that involves the use of a geomagnetic sensor such as an electronic compass. However, in a case where a magnetic pole is located around, it is difficult to use a geomagnetic sensor. Further, in a case where an electronic device is located around, the operation of the electronic device may be affected. This makes it difficult to obtain shifts in the lines of sight with satisfactory accuracy.

To address this problem, the second embodiment is configured such that the line-of-sight difference calculator 401 calculates shifts in the lines of sight in the following manner. First, at the time of radar installation, a target R is placed as a reference within a region where the detection object regions of the radars A 101 and B 102 overlap, and the line-of-sight difference calculator 401 finds out shifts in the lines of sight from the results of detection of the target R by the respective radars. Note here that a suitably usable example of the target R is one that can be deemed to have one point of reflection, such as a corner reflector or a spherical reflector.

Fig. 9 is a conceptual diagram of a method for calculating a shift in the line of sight at the time of radar installation. Fig. 9 shows a description of a model in which the installation position of the radar B 102 in the orthogonal coordinate system of the radar A 101 is subjected to a virtual shift (-a, -b, -c) so that the installation position of the radar B 102 virtually overlaps the installation position of the radar A 101. The position $(x_2', y_2', z_2')$ of the target R after the virtual shift in the installation position can be expressed by Formula (10) below, where $r_3$ is the distance to the target R as detected by the radar B 102, $\gamma_y$ is the azimuth angle (horizontal angle), and $\gamma_z$ is the elevation angle (vertical angle).

$$(x_2', y_2', z_2') = (r_3 \cos(r_z) \cos(r_y) + a,\ r_3 \cos(r_z) \sin(r_y) + b,\ r_3 \sin(r_z) + c) \quad (10)$$

This virtual target R position $(x_2', y_2', z_2')$ is a position obtained by rotating, along the line of sight of the radar B 102, the coordinates $(x_1, y_1, z_1)$ of the target R position in the orthogonal coordinate system of the radar A 101 as detected by the radar A 101. That is, it is a position obtained by rotating the X and Y axes on the X-Y plane by the angle $\theta$ with the Z' axis as the central axis and, furthermore, rotating the rotated X axis and the Z axis on the X-Z plane by the angle $\varphi$ with the rotated Y axis ($Y_2$ axis) as the central axis. This rotation is expressed by a determinant according to Formula (11):

$$\begin{pmatrix} x_2' \\ y_2' \\ z_2' \end{pmatrix} = \begin{pmatrix} \cos\varphi & 0 & -\sin\varphi \\ 0 & 1 & 0 \\ \sin\varphi & 0 & \cos\varphi \end{pmatrix} \begin{pmatrix} \cos\theta & -\sin\theta & 0 \\ \sin\theta & \cos\theta & 0 \\ 0 & 0 & 1 \end{pmatrix} \begin{pmatrix} x_1 \\ y_1 \\ z_1 \end{pmatrix} = \begin{pmatrix} \cos\varphi\cos\theta x_1 - \cos\varphi\sin\theta y_1 - \sin\varphi z_1 \\ \sin\theta x_1 + \cos\theta y_1 \\ \sin\varphi\cos\theta x_1 - \sin\varphi\sin\theta y_1 + \cos\varphi z_1 \end{pmatrix} \quad (11)$$

Applying a synthesis formula of trigonometric function to Formula (11) with attention focused on $y_2'$ yields Formula (12):

$$y_2' = \sqrt{x_1^2 + y_1^2}\sin(\theta + \eta) \quad (12)$$

where

$$\cos\eta = \frac{x_1}{\sqrt{x_1^2 + y_1^2}}$$

$$\sin\eta = \frac{y_1}{\sqrt{x_1^2 + y_1^2}}$$

Given this, the amount of rotation $\theta$ by which the X and Y axes on the X-Y plane are rotated with the Z' axis as the central axis is given by Formula (13):

$$\theta = \arcsin\left(\frac{y_2'}{\sqrt{x_1^2 + y_1^2}}\right) - \arctan\left(\frac{y_1}{x_1}\right)$$

$$= \arcsin\left(\frac{r_3\cos\gamma_z\sin\gamma_y + b}{r_1\cos\alpha_z}\right) - \alpha_y \quad (13)$$

Applying a synthesis formula of trigonometric function to Formula (11) with attention focused on $x_2'$ yields Formula (14):

$$x_2' = ((\cos\theta x_1 - \sin\theta y_1)\cos\varphi - z_1\sin\varphi) = \sqrt{(\cos\theta x_1 - \sin\theta y_1)^2 + z_1^2}\sin(\varphi + \zeta) \quad (14)$$

12

where

$$\cos \zeta = \frac{\cos\theta x_1 - \sin\theta y_1}{\sqrt{(\cos\theta x_1 - \sin\theta y_1)^2 + z_1^2}}$$

$$\sin \zeta = \frac{z_1}{\sqrt{(\cos\theta x_1 - \sin\theta y_1)^2 + z_1^2}}$$

Given this, the amount of rotation $\varphi$ by which the rotated X axis and the Z axis on the X-Z plane are rotated with the $\theta$-rotated Y axis ($Y_2$ axis) as the central axis is given by Formula (15):

$$\varphi = \arcsin\left(\frac{x_2'}{\sqrt{(\cos\theta x_1 - \sin\theta y_1)^2 + z_1^2}}\right) - \zeta$$

$$= \arcsin\left(\frac{r_3\cos\gamma_z\cos\gamma_y + a}{\sqrt{(\cos\theta x_1 - \sin\theta y_1)^2 + z_1^2}}\right) - \arctan\left(\frac{z_1}{\cos\theta x_1 - \sin\theta y_1}\right) \qquad (15)$$

The line-of-sight difference calculator 401 calculates the amounts of rotation $\theta$ and $\varphi$ with reference to positional information and intensity vectors as detected by the radar A 101 and positional information and intensity vectors as detected by the radar B 102 and stores the amounts of rotation $\theta$ and $\varphi$. Description of Radars A and B

The following describes a configuration of the radars A 101 and B 102. In the first to third embodiments described above, the radars A 101 and B 102 as simple radar apparatuses can each employ a pulse compression system in which code division multiplexing is performed on the same frequency channel and complementary codes are used, a combined system of a frequency division multiplexing system or a time division multiplexing system and a chirp system, or the like. The following describes a specific example configuration of the radars A 101 and B 102.

First Example Configuration

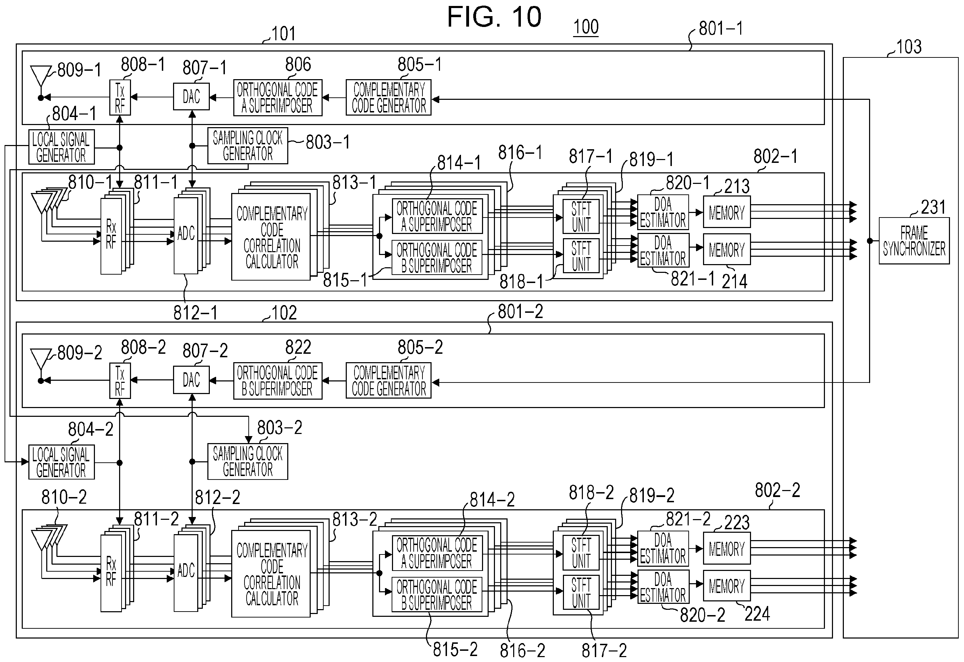

A first example configuration describes an example of employment of a pulse compression system in which code division multiplexing is performed on the same frequency channel and complementary codes are used. Fig. 10 is a block diagram showing internal components of the radars A 101 and B 102. As shown in Fig. 10, the radar A 101 includes a transmitter 801-1, a receiver 802-1, a sampling clock generator 803-1, and a local signal generator 804-1. Similarly, the radar B 102 includes a transmitter 801-2, a receiver 802-2, a sampling clock generator 803-2, and a local signal generator 804-2. Further, the integrated processing apparatus 103 includes the aforementioned frame synchronizer 231 in order to synchronize the radars A 101 and B 102.

It should be noted that the transmitter 801-1 shown in Fig. 10 corresponds, for example, to the transmitter 211 of Figs. 2, 4, and 5, that the receiver 802-1 shown in Fig. 10 corresponds, for example, to the receiver 212 of Figs. 2, 4, and 5, that the transmitter 801-2 shown in Fig. 10 corresponds, for example, to the transmitter 221 of Figs. 2, 4, and 5, and that the receiver 802-2 shown in Fig. 10 corresponds, for example, to the receiver 222 of Figs. 2, 4, and 5. Further, Fig. 10 omits to illustrate the components of the integrated processing apparatus 103 shown, for example, in Figs. 2, 4, and 5, except for the frame synchronizer 231.

As shown in Fig. 10, the transmitter 801-1 includes a complementary code generator 805-1, an orthogonal code A superimposer 806, a DAC (digital/analog converter) 807-1, a transmitting high-frequency unit (transmitting wireless unit) 808-1, and a transmitting antenna (one branch) 809-1. Further, the receiver 802-1 includes a receiving antenna (four branches) 810-1, a receiving high-frequency unit (receiving wireless unit) 811-1, an ADC (analog/digital converter) 812-1, a complementary code correlation calculator 813-1, an orthogonal code superimposer 816-1, a short-time Fourier transform (STFT) unit 819-1, direction-of-arrival (DOA) estimators 820-1 and 821-1, and the aforementioned memories 213 and 214.

Further, the transmitter 801-2 includes a complementary code generator 805-2, an orthogonal code B superimposer 822, a DAC 807-2, a transmitting high-frequency unit 808-2, and a transmitting antenna (one branch) 809-2. Further, the receiver 802-2 includes a receiving antenna (four branches) 810-2, a receiving high-frequency unit 811-2, an ADC 812-2, a complementary code correlation calculator 813-2, an orthogonal code superimposer 816-2, an STFT unit 819-2, DOA estimators 820-2 and 821-2, and the aforementioned memories 223 and 224.

The orthogonal code A superimposer 806 superimposes an orthogonal code A onto an output from the complementary code generator 805-1 of the radar A 101. Meanwhile, the orthogonal code B superimposer 822 superimposes an orthogonal code B onto an output from the complementary code generator 805-2 of the radar B 102. Note here that the receiver 802 can have its correlation arithmetic circuit simplified as one type of circuit by the radars A 101 and B 102 using the same complementary codes. Further, the orthogonal codes A and B are orthogonal to each other and suppress each other's interference components by being integrated after the same codes have also been superimposed in the receiver 802. It should be noted that the orthogonal code A is an example of the first orthogonal code, that the orthogonal code B is an example of the second orthogonal code, and that the orthogonal code A superimposer 806 is an example of the first orthogonal code superimposer.

An output signal from the orthogonal code A superimposer 806 is converted by the DAC 807-1 into an analog baseband signal, inputted to the transmitting high-frequency unit 808-1, converted by orthogonal modulation into a signal in a high-frequency band such as a millimeter waveband, and then emitted into the air through the transmitting antenna 809-1.

The electromagnetic waves emitted into the air are reflected by the target T and, for example, received by the four-branch receiving antenna 810-1. The branches of the receiving antenna 810-1 are placed at a distance of not shorter than a half wavelength to not longer than one wavelength from each other, and the direction of arrival can be estimated by finding out phase differences between signals that are acquired by the respective branches. Four branches of output from the receiving antenna 810-1 are inputted to the receiving high-frequency unit 811-1 and frequency-converted by orthogonal demodulation into baseband complex signals. It should be noted that since local signals are synchronized at both transmission and reception, the signals vary only under the influence of noise in the case of reflected waves from the target T at rest.

The baseband complex signals outputted from the receiving high-frequency unit 811-1 are converted by the ADC 812-1 into digital signals. Since, at this point, sampling clocks are synchronized at both transmission and reception, the signals vary only under the influence of noise in the case of reflected waves from the target T at rest. The complementary code correlation calculator 813-1 performs a correlation calculation with reference to the signals converted by the ADC 812-1 into digital signals. This causes an increase in the signal-to-noise ratio due to coding gain.

The orthogonal code superimposer 816-1 includes an orthogonal code A superimposer 814-1 and an orthogonal code B superimposer 815-1. In the case of monostatic radar processing, the orthogonal code A superimposer 814-1 superimposes the same code A as the transmitter 801-1 of the radar A 101. On the other hand, in the case of bistatic radar processing, the orthogonal code B superimposer 815-1 superimposes the code B of the other radar B 102. It should be noted that the orthogonal code A superimposer 814-1 and the orthogonal code B superimposer 815-1 are examples of the third and fourth orthogonal code superimposers, respectively.

STFT units 817-1 and 818-1 perform Fourier transformation on outputs from the orthogonal code A superimposer 814-1 and the orthogonal code B superimposer 815-1, respectively. The STFT units 817-1 and 818-1 perform discrete Fourier transform by accumulating the number of slots of measurement data corresponding to the number of points of discrete Fourier transform and then extracting the same range bin components acquired at different timings.

The STFT units 817-1 and 818-1 output, to the DOA estimators 820-1 and 821-1, results of integration of components of a frequency at which the total of four branches make maximum electric power. In the monostatic mode, the result is inputted to the DOA estimator 820-1, and in the bistatic mode, the result is inputted to the DOA estimator 821-1. It should be noted that, in the presence of a plurality of targets T, selectivity can be enhanced by utilizing the fact that the targets T have different relative velocities; therefore, for example, a result of integration of frequency components at which the electric power is second highest or third highest, as well as the frequency components at which the electric power is highest, may be outputted to the DOA estimators 820-1 and 821-1. Further, the DOA estimators 820-1 and 821-1 estimate the direction of arrival according to the phase differences between the branches and write estimation results into the memories 213 and 214.

It should be noted that, of the components described above, the orthogonal code A superimposer 814-1, the STFT unit 817-1, and the DOA estimator 820-1 correspond to the monostatic radar processor 215 of the radar A 101 shown in Figs. 2, 4, and 5. Similarly, the orthogonal code B superimposer 815-1, the STFT unit 818-1, and the DOA estimator 821-1 correspond to the bistatic radar processor 216 of the radar A 101 shown in Figs. 2, 4, and 5.

While the components of the radar A 101 have been described above, the operation of each of the components of the radar B 102 is not described below, as it is substantially the same as the operation of the corresponding one of the aforementioned components of the radar A 101, except for the orthogonal code B superimposer 822. It should be noted that the orthogonal code B superimposer 822 superimposes the orthogonal code B onto the output from the complementary code generator 805-2 of the radar B 102. Note here that the orthogonal code A superimposer 814-2 and the orthogonal code B superimposer 815-2 are examples of the third and fourth orthogonal code superimposers, respectively, and the orthogonal code B superimposer 822 is an example of the second orthogonal code superimposer.

It should be noted that, of the components of the radar B 102, the orthogonal code A superimposer 814-2, the STFT unit 817-2, and the DOA estimator 820-2 correspond to the bistatic radar processor 225 of the radar B 102 shown in Figs. 2, 4, and 5. Similarly, the orthogonal code B superimposer 815-2, the STFT unit 818-2, and the DOA estimator 821-2 correspond to the monostatic radar processor 226 of the radar B 102 shown in Figs. 2, 4, and 5.

Next, the sampling clock generator 803-1 generates sampling clocks that are outputted to the DAC 807-1 of the transmitter 801-1 and the ADC 812-1 of the receiver 802-1. Further, the local signal generator 804-1 generates local signals that are used as carrier signals by the transmitting high-frequency unit 808-1 of the transmitter 801-1 and the receiving high-frequency unit 811-1 of the receiver 802-1. This allows the transmitter 801-1 and the receiver 802-1 to be synchronized. It should be noted that the local signal generators 804-1 and 804-2 are an example of a second synchronizer.

Furthermore, the radars A 101 and B 102 are synchronized by connecting the sampling clock generator 803-1 of the radar A 101 and the sampling clock generator 803-2 of the radar B 102 to each other and using the same sampling clocks for the radars A 101 and B 102. The local signal generator 804-1 of the radar A 101 and the local signal generator 804-2 of the radar B 102 are connected to each other, and the same local signals are used for the radars A 101 and B 102. It should be noted that, in the present embodiment, the radars A 101 and B 102 use the same carrier frequency for code division multiplexing.

It should be noted that the radars A 101 and B 102 may be frequency-division multiplexed or time-division multiplexed. However, in the case of frequency division multiplexing, two receiving high-frequency units 811 are required for monostatic use and bistatic use, respectively. Moreover, since, in a case where the relative velocity of the target T and each of the radar apparatuses is not zero, the Doppler offset frequency depends on the carrier frequency even if the relative velocities are equal, it is only necessary to perform a process to correct this. It should be noted that the present embodiment omits to describe this correction process. In the case of time division multiplexing, timings that are obtained by monostatic radars and bistatic radars are not completely identical, with the result that there occur errors in position and velocity.

Incidentally, in order to synchronize the timings of start of operation of the radars A 101 and B 102, the complementary code generator 805-1 of the radar A 101 and the complementary code generator 805-2 of the radar B 102 repeatedly generate complementary codes at the same timing and regular intervals on the basis of frame timing signals from the frame synchronizer 231.

This allows gain to be also obtained by integration from the target T moving relative to the radars A 101 and B 102, bringing about improvement in the signal-to-noise ratio. Furthermore, since frequencies that reach their maximum after STFT performed by the STFT units 817-1, 818-1, 817-2, and 818-2 correspond to Doppler frequency shifts caused by the target T relatively moving, relative velocities can be calculated. The relative velocities calculated by the STFT units 817-1, 818-1, 817-2, and 818-2 are stored in association with the DOA estimation results (detection positions) and written into the memories 213, 214, 223, and 224, respectively.

Further, the STFT units 817-1, 818-1, 817-2, and 818-2 may set the number of points of discrete Fourier transform so that it is an integral multiple of the periods of the orthogonal codes A and B. The components in the radars A 101 and B 102 that interfere with each other are suppressed. This makes it possible to improve the accuracy of the results of observation in the monostatic mode and the bistatic mode.

In the present embodiment, the radars A 101 and B 102 are synchronized and transmit radar transmission waves generated by superimposing different orthogonal codes, respectively. This makes it unnecessary to occupy a plurality of channels and makes it possible to achieve efficient use of transmit frequencies. Further, the high-frequency units, which tend to become larger in circuit size, may be configured in the same manner as conventional radar apparatuses. This makes it possible to avoid complicating the configuration of the radars A 101 and B 102. That is, the radars A 101 and B 102 of the present embodiment may be circuit configurations in which the ADC 812 to the DOA estimators 820, which process digital signals, correspond to a plurality of orthogonal codes.

Second Example Configuration

The following describes a second example configuration of the radars A 101 and B 102. The second example configuration describes securing the flexibility of system installation without making a synchronization signal connection between the radars A 101 and B 102.

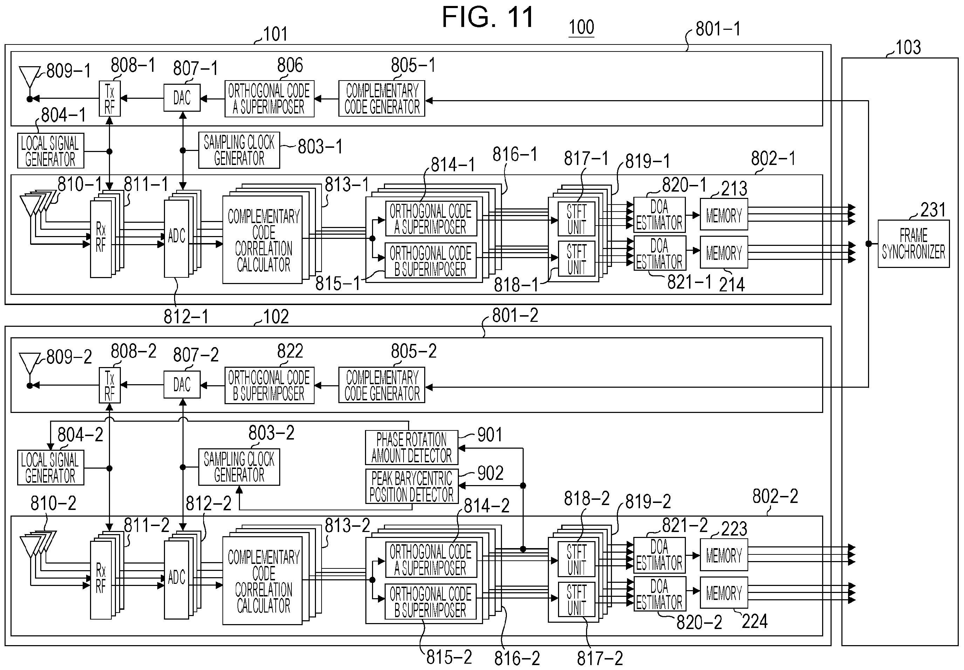

Fig. 11 is a block diagram showing the second example configuration of internal components of the radars A 101 and B 102. The differences between the second example configuration of the radars A 101 and B 102 shown in Fig. 11 and the first example configuration shown in Fig. 10 are as follows: In the second example configuration, the radar B 102 includes a phase rotation amount detector 901 and a peak barycentric position detector 902, and the local synchronization signal line and the sampling clock synchronization signal line, which connect the radars A 101 and B 102 to each other, are deleted.

It should be noted that the transmitter 801-1 shown in Fig. 11 corresponds, for example, to the transmitter 211 of Figs. 2, 4, and 5, that the receiver 802-1 shown in Fig. 11 corresponds, for example, to the receiver 212 of Figs. 2, 4, and 5, that the transmitter 801-2 shown in Fig. 11 corresponds, for example, to the transmitter 221 of Figs. 2, 4, and 5, and that the receiver 802-2 shown in Fig. 11 corresponds, for example, to the receiver 222 of Figs. 2, 4, and 5. Further, Fig. 11 omits to illustrate the components of the integrated processing apparatus 103 shown, for example, in Figs. 2, 4, and 5, except for the frame synchronizer 231.

Incidentally, radar transmission waves from the radar A 101 can be directly received by the radar B 102 without being reflected by the target T. At the time of startup of the multi-radar system 100, the radar B 102 activates the receiver 802-2 without activating the transmitter 801-2. In accordance with signals received, the receiving antenna 810-2 to the orthogonal code A superimposer 814-2 perform the same processes as those of the first example configuration described above, and the peak barycentric position detector 902 observes an output signal from the orthogonal code A superimposer 814-2.

Note here that the radars A 101 and B 102 have their frame timings matched by the frame synchronizer 231; therefore, in a case where a received wave (direct wave) directly received from the radar A 101 is present in a delay profile that is obtained by the output from the orthogonal code A superimposer 814-2, the received wave appears as a minimum time peak. As long as the radars A 101 and B 102 have their sampling clocks synchronized, this peak position remains unchanged from a range bin corresponding to the distance between the radars A 101 and B 102. However, in the second example configuration, the peak position shifts as time passes, as the sampling clocks are out of synchronization.

In a case where the peak position moves in such a shift direction that the distance between the radars A 101 and B 102 becomes longer, the peak barycentric position detector 902 determines that the frequency of sampling clocks of the radar B 102 is higher than that of the radar A 101. On the other hand, in a case where the peak position moves in such a shift direction that the distance between the radars A 101 and B 102 becomes shorter, the peak barycentric position detector 902 determines that the frequency of sampling clocks of the radar B 102 is lower than that of the radar A 101. Accordingly, in order that the position of the range bin is constant, the peak barycentric position detector 902 feedback-controls the phase of a PLL (phase-locked loop) (not illustrated) included in the sampling clock generator 803-2 according to the shift amount of the peak position. It should be noted that the peak barycentric position detector 902 is an example of the first feedback controller.

For more high-accuracy synchronization, the peak barycentric position detector 902 may calculate a barycentric position including electric powers in front of and behind the peak position and control the phase of a PLL inside the sampling clock generator 803-2 so that this peak barycentric position remains unchanged.

After the peak barycentric position has been stabilized, the phase rotation amount detector 901 observes complex signals of the range bin serving as the peak position, for example, at regular intervals of slot period and calculates a phase rotation amount. Then, in order that the phase rotation amount thus calculated becomes zero, the phase rotation amount detector 901 feedback-controls the phase of a PLL including in the local signal generator 804-2. This allows the local signal generator 804-2 to generate a local signal synchronized with a local signal of the radar A 101. The phase rotation amount detector 901 is an example of the second feedback controller.

It should be noted that in a case where the multi-radar system 100 moves, the radars A 101 and B 102 move in an integrated fashion and the velocities of the radars A 101 and B 102 relative to each other are zero. Note here that in the case of a received wave (direct wave) directly received by the radar B 102 without being reflected by the target T from the radar A 101, the phase rotation amount is zero, as there occurs no Doppler frequency shift.

Note here that in a case where the multi-radar system 100 makes a movement such as a gyrating movement, the velocities of the radars A 101 and B 102 relative to each other are generated. It should be noted that by matching the local frequency of the radar B 102 to the local frequency of the radar A 101 so that no relative velocity is generated, velocity information that is inputted from the radar B 102 to the integrated processing apparatus 103 is also automatically corrected to be a velocity with reference to the radar A 101. This suitably compensates for an error that occurs due to the relative velocities of the radars A 101 and B 102. Third Example Configuration

In a case where a millimeter waveband is used as radar transmission waves, the local signals are in a high-frequency band of, for example, 80 GHz, it becomes difficult to perform phase control with a high degree of accuracy. That is, it is anticipated that there occurs a residual phase error even when the local signal generators 804 are feedback-controlled.

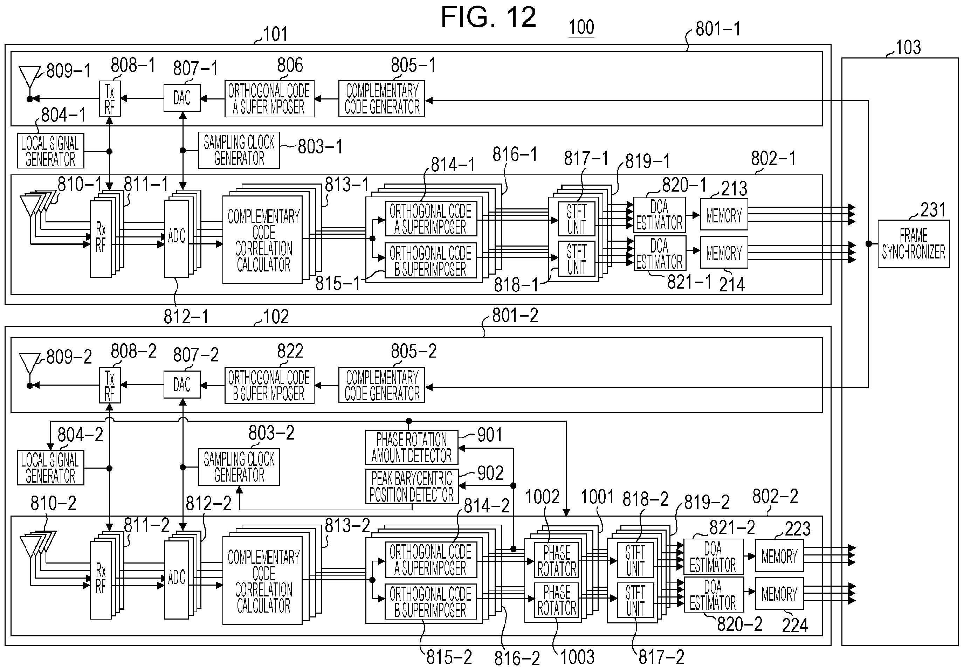

To address this problem, a third example configuration, as shown in Fig. 12, reduces a residual phase error by adding a phase rotator 1001 to the second example configuration and performing feedforward control. Fig. 12 is a block diagram showing a third example configuration of internal components of the radars A 101 and B 102.

As shown in Fig. 12, the phase rotator 1001 includes a phase rotator 1002 and a phase rotator 1003. The output from the orthogonal code A superimposer 814-2 is inputted to the phase rotator 1002, and the output from the orthogonal code B superimposer 815-2 is inputted to the phase rotator 1003. The phase rotators 1002 and 1003 give phase rotations to the outputs from the orthogonal code A superimposer 814-2 and the orthogonal code B superimposer 815-2 so as to compensate for the result of detection of a phase rotation amount generated by a residual phase error.

It should be noted that the transmitter 801-1 shown in Fig. 12 corresponds, for example, to the transmitter 211 of Figs. 2, 4, and 5, that the receiver 802-1 shown in Fig. 12 corresponds, for example, to the receiver 212 of Figs. 2, 4, and 5, that the transmitter 801-2 shown in Fig. 12 corresponds, for example, to the transmitter 221 of Figs. 2, 4, and 5, and that the receiver 802-2 shown in Fig. 12 corresponds, for example, to the receiver 222 of Figs. 2, 4, and 5. Further, Fig. 12 omits to illustrate the components of the integrated processing apparatus 103 shown, for example, in Figs. 2, 4, and 5, except for the frame synchronizer 231.

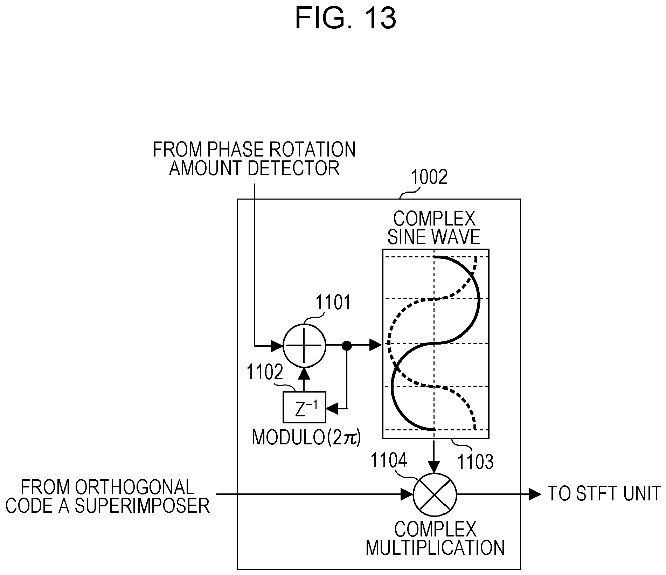

As a method by which the phase rotators 1002 and 1003 give phase rotations, for example, a method that involves the use of NCOs (numerically-controlled oscillators), such as that shown in Fig. 13, may be employed. Fig. 13 shows an example configuration of the phase rotator 1002.

In Fig. 13, the phase rotator 1002 accumulates, by a modulo $2\pi$, phase rotation amounts detected by the phase rotation amount detector 901, reads out complex amplitude from a complex sine wave table whose address is a result of the accumulation, and multiplies the complex amplitude thus read out by the output from the phase rotator 1001. The phase rotator 1002 includes an adder 1101, a delayer 1102, a complex sine wave table 1103, and a complex multiplier 1104.

The phase rotation amounts detected by the phase rotation amount detector 901 are accumulated by being added by the adder 1101 to an accumulated value one period ago generated by the delayer 1102. The amplitude of a complex sine wave whose address is a result of the addition is read out from the complex sine wave table 1103, and the complex multiplier 1104 multiplies the complex amplitude thus read out by the signal from the orthogonal code A superimposer 814-2. The output from the complex multiplier 1104 is outputted to the subsequent STFT unit 818-2. The complex multiplication of the complex multiplier 1104 compensates for a residual phase error component.

Fourth Example Configuration

The following describes a fourth example configuration of the radars A 101 and B 102. The fourth example configuration is a configuration based on a MIMO (multiple-input and multiple-output) radar system that makes it possible to substantially increase the antenna aperture length without increasing the circuit size of the high-frequency units. The fourth example configuration is described by taking, as an example, a case where transmitters 1201 each include two antennas and receivers 1202 each include four antennas.

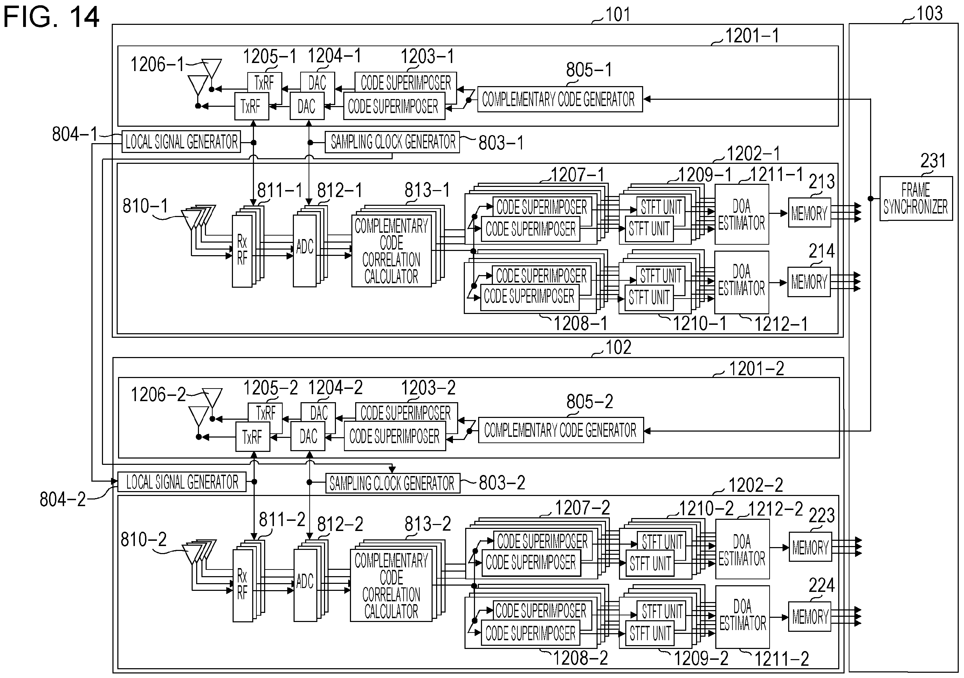

Fig. 14 is a block diagram showing the fourth example configuration of internal components of the radars A 101 and B 102. In the fourth example configuration, the radar A 101 includes a transmitter 1201-1, a receiver 1202-1, a sampling clock generator 803-1, and a local signal generator 804-1.

The transmitter 1201-1 includes a complementary code generator 805-1, a code superimposer 1203-1, a DAC 1204-1, a transmitting high-frequency unit 1205-1, and a transmitting antenna (two branches) 1206-1. Further, the receiver 1202-1 includes a receiving antenna (four branches) 810-1, a receiving high-frequency unit 811-1, an ADC 812-1, a complementary code correlation calculator 813-1, code superimposers 1207-1 and 1208-1, STFT units 1209-1 and 1210-1, DOA estimators 1211-1 and 1212-1, and memories 213 and 214. More specifically, the transmitter 1201-1 includes a two-line code superimposer 1203-1, a two-line DAC 1204-1, and a two-line transmitting high-frequency unit 1205-1 that correspond to the two-branch transmitting antenna.

In the fourth example configuration, the radar B 102 includes a transmitter 1201-2, a receiver 1202-2, a sampling clock generator 803-2, and a local signal generator 804-2.

It should be noted that the transmitter 1201-2 includes a complementary code generator 805-2, a code superimposer 1203-2, a DAC 1204-2, a transmitting high-frequency unit 1205-2, and a transmitting antenna (two branches) 1206-2. Further, the receiver 1202-2 includes a receiving antenna (four branches) 810-2, a receiving high-frequency unit 811-2, an ADC 812-2, a complementary code correlation calculator 813-2, code superimposers 1207-2 and 1208-2, STFT units 1209-2 and 1210-2, DOA estimators 1211-2 and 1212-2, and memories 223 and 224.

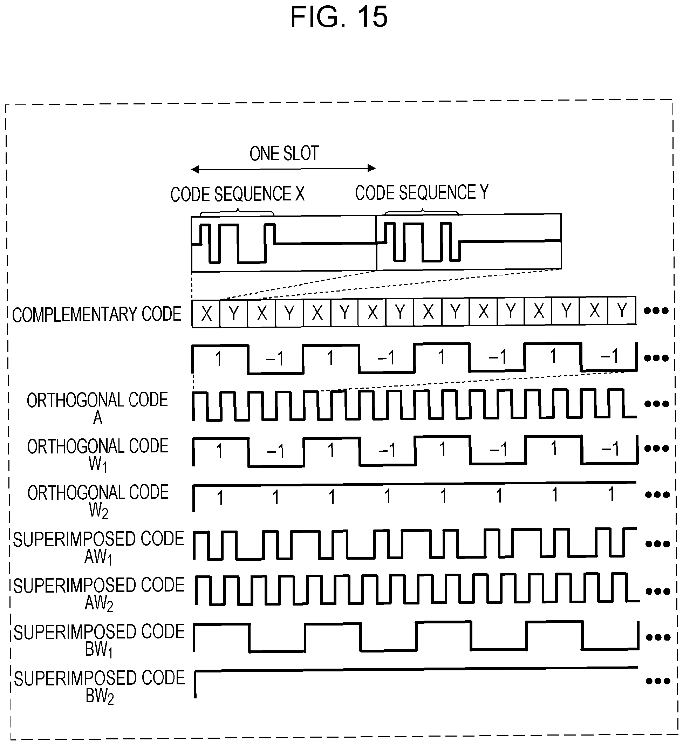

In order to apply the MIMO system, the two-line code superimposer 1203-1 redundantly superimposes, onto the output from the complementary code generator 805-1, an inter-radar multiplexing orthogonal code A for distinguishing between a transmission signal from the radar A 101 and a transmission signal from the radar B 102 and inter-stream multiplexing orthogonal codes $W_1$ and $W_2$. When the superimposed codes $AW_1$ and $AW_2$ of the codes A and $W_1$ are related to each other as shown in Fig. 15 so that the code periods and lengths per code of the inter-radar multiplexing orthogonal code A and the inter-stream multiplexing orthogonal codes $W_1$ and $W_2$ are different lengths, orthogonality is suitably kept.

Fig. 15 shows an example of a timing chart showing a relationship between inter-radar multiplexing orthogonal codes and inter-stream multiplexing orthogonal codes. Complementary codes X and Y are repeatedly generated from the complementary code generator 805-1. First, the inter-radar multiplexing orthogonal code A, whose one period corresponds to a pair of complementary codes, is superimposed and, furthermore, the inter-stream multiplexing orthogonal code $W_1$, one code of which corresponds to four codes of the inter-radar multiplexing orthogonal code A, is further superimposed. Furthermore, the code superimposer 1203-1 superimposes the codes A and $W_2$ for the other MIMO stream multiplexed signal. In a case where a sequence of inter-stream multiplexing orthogonal codes $W_2$ is "all 1", codes such as those indicated by "SUPERIMPOSED CODE $AW_2$" of Fig. 15 are superimposed.

Meanwhile, the code superimposer 1203-2 of the radar B 102 redundantly superimposes the code B and the codes $W_1$ and $W_2$ onto the output from the complementary code generator 805-2. In a case where a sequence of inter-radar multiplexing orthogonal codes B is "all 1", "SUPERIMPOSED CODE $BW_1$" and "SUPERIMPOSED CODE $BW_2$" of Fig. 15 are superimposed. It should be noted that the codes $BW_2$ are "all 1" superimposed on each other and, as such, are "all 1".

The two-line DAC 1204-1 converts the signals on which the codes $AW_1$ and $AW_2$ are superimposed into analog baseband signals, respectively. The two-line transmitting high-frequency unit 1205-1 frequency-converts the analog baseband signals into signals in a high-frequency band such as a millimeter waveband by orthogonal modulation. The high-frequency signals generated by the transmitting high-frequency unit 1205-1 are emitted into the air through the two-branch transmitting antenna 1206-1.

The electromagnetic waves emitted into the air are reflected by the target T and received by the four-branch receiving antenna 810-1. The branches of the receiving antenna 810-1 are placed at a distance of not shorter than a half wavelength to not longer than one wavelength from each other, and the direction of arrival can be estimated by finding out phase differences between signals that are acquired by the respective branches. In the fourth example configuration, which applies the MIMO radar system, a virtual antenna array is configured in addition to an actual antenna array, and signals from the virtual antenna array are also used in direction-of-arrival estimation processes in the DOA estimators 1211-1 and 1212-1.

Four branches of output from the receiving antenna 810-1 are each inputted to any of the four lines of the receiving high-frequency unit 811-1. The four-line receiving high-frequency unit 811-1 frequency-converts the received signals into baseband complex signals. The baseband complex signals are converted by the ADC 812-1 into digital signals and subjected by the four-line complementary code correlation calculator 813-2 to correlation calculation processes. This causes an increase in the signal-to-noise ratio due to coding gain. The code superimposers 1207-1 and 1208-1 perform processes as monostatic radars by superimposing the codes $AW_1$ and $AW_2$ onto correlation calculation results for each separate stream. Similarly, the code superimposer 1208-1 performs a process as a bistatic radar by superimposing the codes $BW_1$ and $BW_2$ onto correlation calculation results for each separate stream. This requires eight lines (= two streams x four branches) of these code superimposers 1207-1 and 1208-1.

The STFT units 1209-1 and 1210-1 perform Fourier transformation on superimposition results of the respective lines. As with the code superimposers 1207-1 and 1208-1, eight lines (= two streams $\times$ four branches) of these STFT units 1209-1 and 1210-1 are required. By setting the number of points of discrete Fourier transform to be a multiple of a number multiplied by the number of slots required for one period of each of the inter-radar multiplexing and inter-stream multiplexing orthogonal codes, an orthogonal relation between both the inter-radar multiplexing and inter-stream multiplexing orthogonal codes is satisfied. This allows the STFT units 1209-1 and 1210-1 to sufficiently suppress interference between the inter-radar multiplexing and inter-stream multiplexing orthogonal codes.

From eight lines of these STFT units, results of integration of components of a frequency at which the total of eight lines make maximum electric power are inputted to the DOA estimators 1211-1 and 1212-1. The result of integration in the monostatic mode is inputted to the DOA estimator 1211-1, and the result of integration in the bistatic mode is inputted to the DOA estimator 1212-1. It should be noted that, as in the case of the first example configuration, the selectivity of a plurality of targets T may be enhanced by outputting, for example, a result of integration of frequency components at which the electric power is second highest or third highest, as well as the frequency components at which the electric power is highest, to the DOA estimators 1211-1 and 1212-1. The DOA estimators 1211-1 and 1212-1 estimate the direction of arrival for the phase differences of the total of eight lines including the virtual array and write estimation results into the memories 213 and 214.

Thus, in a case where the MIMO radar system is applied, for example, arranging a plurality of transmitting antennas in a vertical direction makes it possible to also estimate a direction of arrival in a vertical direction without increasing the circuit size of the receiving high-frequency units, even if the receiving antennas are arranged in a horizontal direction.

Fifth Example Configuration

In the first example configuration shown in Fig. 10, both the sampling clock generators 803-1 and 803-2 and the local signal generators 804-1 and 804-2 are directly connected to synchronize the radars A 101 and B 102. On the other hand, a fifth example configuration is a configuration in which a crystal oscillation device output serving as a frequency oscillation is connected for local signals so that commonality of comparatively low-frequency signals is achieved.

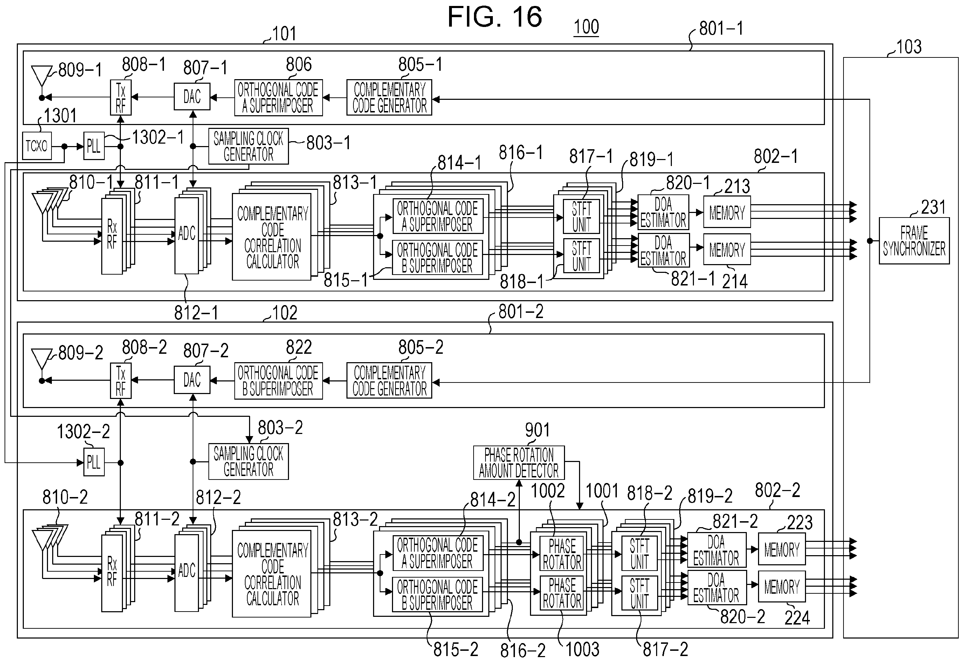

Fig. 16 is a block diagram showing the fifth example configuration of internal components of the radars A 101 and B 102. It should be noted that the differences between the fifth example configuration of the radars A 101 and B 102 shown in Fig. 16 and the first example configuration shown in Fig. 10 are as follows: For example, in the fifth example configuration, the local signal generator 804-1 of the radar A 101 is constituted by a TCXO unit 1301 and a PLL unit 1302-1, and an output of the TCXO unit 1301 of the radar A 101 is connected to an inputter of a PLL unit 1302-2 of the radar B 102; furthermore, the sampling clock generator 803-2 of the radar B 102 is synchronized with the sampling clock generator 803-1 of the radar A 101.

As a common configuration in which a high-frequency signal with excellent phase noise characteristics is generated, a feedback loop (PLL) is used which makes a phase comparison between a signal from a crystal oscillation device with excellent frequency stability and a signal obtained by dividing a high-frequency signal (radio-frequency signal) from a VCO (voltage-controlled oscillator) and control an input voltage to the VCO so that the phase difference becomes zero. As the crystal oscillation device, a temperature-compensated crystal oscillator (TCXO) having an oscillation frequency of approximately several tens of megahertz is often used which is lower in frequency than a millimeter-wave frequency band and makes it possible, for example, to use an inexpensive cable for making an inter-radar connection.

Note, however, that since the plurality of radars have separate PLLs configured subsequent to the TCXO, it is difficult to go so far as to establish phase synchronization between the plurality of radars, even with frequency synchronization established between the plurality of radars. For this reason, in a millimeter-wave frequency band, there is a case where there is a change in phase after orthogonal code superimposition even in the case of a signal of a range bin whose SNR is sufficiently large, as in the case of a direct wave from the radar A installed in a proximate position. To address this problem, the fifth example configuration compensates for a residual phase error by adding the phase rotation amount detector 901 and the phase rotator 1001. It should be noted that the method for processing a residual phase error is not described here, as it is the same as those of the other example configurations.

Taking such a configuration suitably makes it possible to reduce the cost of inter-radar synchronization and secure sufficient synchronization performance.

In the foregoing, various embodiments have been described with reference to the drawings. However, the present disclosure is of course not limited to such examples. It is apparent that persons skilled in the art can conceive of various changes and alterations within the scope of claims, and such changes and alterations are naturally understood as pertaining to the technical scope of the present disclosure. Each constituent element in the embodiment described above may be arbitrarily combined with the other without departing from the spirit of the disclosure.

The multi-radar systems 100, 100a, and 100b according to the first to third embodiments described above have been described with reference to an example in which each of them include two radars, namely the radars A 101 and B 102. However, the present disclosure is not limited to this example. For example, each of the multi-radar systems 100, 100a, and 100b may be configured to include three or more radar apparatuses.

Further, while each embodiment has been described above by taking, as an example, a case where the present disclosure is configured by hardware, the present disclosure can also be realized by software in cooperation with hardware.

Further, each functional block used in the description of each embodiment described above can be typically realized by an LSI such as an integrated circuit including an input and an output coupled thereto. These LSIs may be individually formed as one chip, or one chip may be formed so as to include a part or all of the functional blocks. The LSI here may be referred to as an IC (integrated circuit), a system LSI, a super LSI, or an ultra LSI depending on a difference in the degree of integration.

However, the technique of implementing an integrated circuit is not limited to the LSI and may be realized by using a dedicated circuit or a general-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used.

If future integrated circuit technology replaces LSIs as a result of the advancement of semiconductor technology or other derivative technology, the functional blocks could be integrated using the future integrated circuit technology. Biotechnology can also be applied.

Summary of the Present Disclosure

A multi-radar system of the present disclosure includes: a first radar apparatus including a first transmitter that transmits a first transmission signal, a first receiver that receives reflected-wave signals reflected by a target in a monostatic radar mode and a bistatic radar mode, respectively, and a first estimator that a direction-of-arrival estimation with reference to the reflected-wave signals thus received; a second radar apparatus including a second transmitter that transmits a second transmission signal, a second receiver that receives the reflected-wave signals reflected by the target in the monostatic radar mode and the bistatic radar mode, respectively, and a second estimator that performs the direction-of-arrival estimation with reference to the reflected-wave signals thus received; a synthesizer that synthesizes a result of the direction-of-arrival estimation in the bistatic radar mode of the first radar apparatus and a result of the direction-of-arrival estimation in the bistatic radar mode of the second radar apparatus; and an integrated processing apparatus including a shape estimator that estimate a shape of the target with reference to a result of the direction-of-arrival estimation in the monostatic radar mode of the first radar apparatus, a result of the direction-of-arrival estimation in the monostatic radar mode of the second radar apparatus, and an output from the synthesizer.

In the multi-radar system of the present disclosure, the synthesizer synthesizes relative velocity information of the target and synthesizes intensity information of the reflected-wave signals, the relative velocity information of the target and the intensity information of the reflected-wave signals being included in the results of the direction-of-arrival estimation in the bistatic radar mode of the first and second radar apparatuses.

In the multi-radar system of the present disclosure, in a case where the synthesized intensity information of the reflected-wave signals is equal to or greater than a first threshold, the shape estimator estimates the shape of the target with reference to the synthesized relative velocity information of the target and positional information of the target, the synthesized relative velocity information of the target and the positional information of the target being included in the results of the direction-of-arrival estimation in the bistatic radar mode of the first and second radar apparatuses.

In the multi-radar system of the present disclosure, in a case where intensity information of the reflected-wave signals is equal to or greater than a second threshold, the shape estimator estimates the shape of the target with reference to relative velocity information of the target and positional information of the target, the intensity information of the reflected-wave signals being included in the result of the direction-of-arrival estimation in the monostatic radar mode of the first radar apparatus.

In the multi-radar system of the present disclosure, in a case where intensity information of the reflected-wave signals is equal to or greater than a third threshold, the shape estimator estimates the shape of the target with reference to relative velocity information of the target and positional information of the target, the intensity information of the reflected-wave signals being included in the result of the direction-of-arrival estimation in the monostatic radar mode of the second radar apparatus.

In the multi-radar system of the present disclosure, the integrated processing apparatus includes a coordinate transformer that transforms the results of the direction-of-arrival estimation in each of the monostatic and bistatic radar modes of the first and second radar apparatuses from polar representations into orthogonal representations on the basis of a difference in line of sight between the first and second radar apparatuses and an installation position of the second radar apparatus.

In the multi-radar system of the present disclosure, the integrated processing apparatus includes a line-of-sight difference calculator that, in a case where a reference target is installed in a region where a detection region of the first radar apparatus and a detection region of the second radar apparatus overlap, calculates a difference in line of sight between the first and second radar apparatuses on the basis of a first distance to the reference target as detected by the first radar apparatus, a first azimuth angle, a first elevation angle, a second distance to the reference target as detected by the second radar apparatus, a second azimuth angle, and a second elevation angle.

In the multi-radar system of the present disclosure, the first and second radar apparatuses use the same frequency channel, and the first and second radar apparatuses each includes a synchronizer that synchronizes a first carrier signal of the first radar apparatus and a second carrier signal of the second radar apparatus.

In the multi-radar system of the present disclosure, the first radar apparatus includes a first orthogonal code superimposer that generates a pulse code on which a first orthogonal code is superimposed, the second radar apparatus includes a second orthogonal code superimposer that generates a pulse code on which a second orthogonal code is superimposed, the second orthogonal code being orthogonal to the first orthogonal code, and the first and second radar apparatuses include third and fourth orthogonal code superimposers that superimpose the first and second orthogonal codes onto the received signals.

In the multi-radar system of the present disclosure, the first and second radar apparatuses include digital/analog converters, analog/digital converters, and sampling clock generators that output sampling clock signals to the digital/analog converters and the analog/digital converters, and the sampling clock generators of the first and second radar apparatuses are synchronized with each other.

In the multi-radar system of the present disclosure, the second radar apparatus includes a first feedback controller that, on receipt of a direct wave from the first radar apparatus, feedback-controls phases of the sampling clock signals that are used to adjust a timing at which the direct wave is detected.

In the multi-radar system of the present disclosure, the second radar apparatus includes a second feedback controller that feedback-controls a carrier-signal phase of the second transmission signal used for decreasing a phase error in the direct wave.

In the multi-radar system of the present disclosure, the second radar apparatus includes a phase rotator used for decreasing a phase error in the direct wave.

In the multi-radar system of the present disclosure, the first transmitter of the first radar apparatus generates a plurality of first signals on which a first orthogonal code is superimposed and transmits the plurality of first signals through a plurality of first antennas, the second transmitter of the second radar apparatus generates a plurality of second signals on which a second orthogonal code is superimposed and transmits the plurality of second signals through a plurality of second antennas, the second orthogonal code being orthogonal to the first orthogonal code, and the first receiver of the first radar apparatus and the second receiver of the second radar apparatus superimpose the first and second orthogonal codes onto the reflected-wave signals thus received and separate them into a plurality of third signals to calculate a direction of arrival.

In the multi-radar system of the present disclosure, the first radar apparatus includes a crystal oscillator and a first phase-locked loop, the second radar apparatus includes a second phase-locked loop and a phase rotator, the first carrier signal is generated by inputting an output signal from the crystal oscillator to the first phase-locked loop, the second carrier signal is generated by inputting the output signal from the crystal oscillator to the second phase-locked loop, and in a case where the second radar apparatus receives a direct wave from the first radar apparatus, the phase rotator rotates a phase of the direct wave.

The present disclosure is suitably applicable to a multi-radar system including a plurality of radar apparatuses.

**Claims**

1. A multi-radar system comprising:

   a first radar apparatus including a first transmitter that transmits a first transmission signal, a first receiver that receives reflected-wave signals reflected by a target in a monostatic radar mode and a bistatic radar mode, respectively, and a first estimator that a direction-of-arrival estimation with reference to the reflected-wave signals thus received;
   a second radar apparatus including a second transmitter that transmits a second transmission signal, a second receiver that receives the reflected-wave signals reflected by the target in the monostatic radar mode and the bistatic radar mode, respectively, and a second estimator that performs the direction-of-arrival estimation with reference to the reflected-wave signals thus received;
   a synthesizer that synthesizes a result of the direction-of-arrival estimation in the bistatic radar mode of the first radar apparatus and a result of the direction-of-arrival estimation in the bistatic radar mode of the second radar apparatus; and
   an integrated processing apparatus including a shape estimator that estimate a shape of the target with reference to a result of the direction-of-arrival estimation in the monostatic radar mode of the first radar apparatus, a result of the direction-of-arrival estimation in the monostatic radar mode of the second radar apparatus, and an output from the synthesizer.

2. The multi-radar system according to Claim 1, wherein the synthesizer synthesizes relative velocity information of the target and synthesizes intensity information of the reflected-wave signals, the relative velocity information of the target and the intensity information of the reflected-wave signals being included in the results of the direction-of-arrival estimation in the bistatic radar mode of the first and second radar apparatuses.

3. The multi-radar system according to Claim 2, wherein in a case where the synthesized intensity information of the reflected-wave signals is equal to or greater than a first threshold, the shape estimator estimates the shape of the target with reference to the synthesized relative velocity information of the target and positional information of the target, the synthesized relative velocity information of the target and the positional information of the target being included in the results of the direction-of-arrival estimation in the bistatic radar mode of the first and second radar apparatuses.

4. The multi-radar system according to Claim 1, wherein in a case where intensity information of the reflected-wave signals is equal to or greater than a second threshold, the shape estimator estimates the shape of the target with reference to relative velocity information of the target and positional information of the target, the intensity information of the reflected-wave signals being included in the result of the direction-of-arrival estimation in the monostatic radar mode of the first radar apparatus.

5. The multi-radar system according to Claim 1, wherein in a case where intensity information of the reflected-wave signals is equal to or greater than a third threshold, the shape estimator estimates the shape of the target with reference to relative velocity information of the target and positional information of the target, the intensity information of the reflected-wave signals being included in the result of the direction-of-arrival estimation in the monostatic radar mode of the second radar apparatus.

6. The multi-radar system according to Claim 1, wherein the integrated processing apparatus includes a coordinate transformer that transforms the results of the direction-of-arrival estimation in each of the monostatic and bistatic radar modes of the first and second radar apparatuses from polar representations into orthogonal representations on the basis of a difference in line of sight between the first and second radar apparatuses and an installation position of the second radar apparatus.

7. The multi-radar system according to Claim 2, wherein the integrated processing apparatus includes a line-of-sight difference calculator that, in a case where a reference target is installed in a region where a detection region of the first radar apparatus and a detection region of the second radar apparatus overlap, calculates a difference in line of sight between the first and second radar apparatuses on the basis of a first distance to the reference target as detected by the first radar apparatus, a first azimuth angle, a first elevation angle, a second distance to the reference target as detected by the second radar apparatus, a second azimuth angle, and a second elevation angle.

8. The multi-radar system according to Claim 1, wherein the first and second radar apparatuses use the same frequency channel, and
the first and second radar apparatuses each includes a synchronizer that synchronizes a first carrier signal of the first radar apparatus and a second carrier signal of the second radar apparatus.

9. The multi-radar system according to Claim 1, wherein the first radar apparatus includes a first orthogonal code superimposer that generates a pulse code on which a first orthogonal code is superimposed,
the second radar apparatus includes a second orthogonal code superimposer that generates a pulse code on which a second orthogonal code is superimposed, the second orthogonal code being orthogonal to the first orthogonal code,and
the first and second radar apparatuses include third and fourth orthogonal code superimposers that superimpose the first and second orthogonal codes onto the received signals.

10. The multi-radar system according to Claim 1, wherein the first and second radar apparatuses include digital/analog converters, analog/digital converters, and sampling clock generators that output sampling clock signals to the digital/analog converters and the analog/digital converters, and
the sampling clock generators of the first and second radar apparatuses are synchronized with each other.

11. The multi-radar system according to Claim 10, wherein the second radar apparatus includes a first feedback controller that, on receipt of a direct wave from the first radar apparatus, feedback-controls phases of the sampling clock signals that are used to adjust a timing at which the direct wave is detected,

12. The multi-radar system according to Claim 11, wherein the second radar apparatus includes a second feedback controller that feedback-controls a carrier-signal phase of the second transmission signal used for decreasing a phase error in the direct wave.

13. The multi-radar system according to Claim 12, wherein the second radar apparatus includes a phase rotator used for decreasing a phase error in the direct wave.

14. The multi-radar system according to Claim 1, wherein the first transmitter of the first radar apparatus generates a plurality of first signals on which a first orthogonal code is superimposed and transmits the plurality of first signals through a plurality of first antennas,
the second transmitter of the second radar apparatus generates a plurality of second signals on which a second orthogonal code is superimposed and transmits the plurality of second signals through a plurality of second antennas, the second orthogonal code being orthogonal to the first orthogonal code, and
the first receiver of the first radar apparatus and the second receiver of the second radar apparatus superimpose the first and second orthogonal codes onto the reflected-wave signals thus received and separate them into a plurality of third signals to calculate a direction of arrival.

15. The multi-radar system according to Claim 8, wherein the first radar apparatus includes a crystal oscillator and a first phase-locked loop,
the second radar apparatus includes a second phase-locked loop and a phase rotator,
the first carrier signal is generated by inputting an output signal from the crystal oscillator to the first phase-locked loop,
the second carrier signal is generated by inputting the output signal from the crystal oscillator to the second phase-locked loop, and
in a case where the second radar apparatus receives a direct wave from the first radar apparatus, the phase rotator rotates a phase of the direct wave.

# FIG. 1

FIG. 2

## FIG. 3

RADAR A SIDE INTENSITY VECTOR SEQUENCE

301 $Z^{-1}$
302 $Z^{-1}$
303 $Z^{-1}$

304 ⊗
305 ⊗
306 ⊗
307 ⊕

308 POWER CALCULATOR
309 THRESHOLD COMPARATOR

RADAR B SIDE INTENSITY VECTOR SEQUENCE

317 COMPLEX CONJUGATE CALCULATOR

310 $Z^{-1}$
311 $Z^{-1}$
312 $Z^{-1}$

318 COMPLEX CONJUGATE CALCULATOR

313 PHASE DIFFERENCE DETECTOR

314 PHASE ROTATOR

315

316 ⊕

TO THRESHOLD COMPARATOR 243

241

EP 3 301 470 A2

FIG. 4

FIG. 5

100b

EP 3 301 470 A2

FIG. 6

X AXIS: DISTANCE

T

$(x_1, y_1, z_1)$
$= (r_1 \cos(\alpha_z) \cos(\alpha_y),$
$\quad r_1 \cos(\alpha_z) \sin(\alpha_y),$
$\quad r_1 \sin(\alpha_z))$

$\alpha_y$

$r_1$

$\alpha_z$

Z AXIS:
ELEVATION ANGLE

Y AXIS: AZIMUTH ANGLE

(0,0,0)

INSTALLATION POSITION OF RADAR A 101

FIG. 7

$X_{2m}$ AXIS    X' AXIS

Z' AXIS

$\theta$

INSTALLATION POSITION
OF RADAR B 102

X AXIS:
DISTANCE

T

$Y_2$ AXIS

$\theta$

Y' AXIS

(a,b,c)

Z AXIS:
ELEVATION ANGLE

Y AXIS: AZIMUTH ANGLE

(0,0,0)

INSTALLATION POSITION OF RADAR A 101

FIG. 8

FIG. 9

$$(x_2', y_2', z_2')$$
$$= (r_3\cos(\gamma_z)\cos(\gamma_y)+a,$$
$$r_3\cos(\gamma_z)\sin(\gamma_y)+b,$$
$$r_3\sin(\gamma_z)+c)$$

FIG. 10

EP 3 301 470 A2

# FIG. 11

EP 3 301 470 A2

FIG. 12

# FIG. 13

FROM PHASE ROTATION
AMOUNT DETECTOR

1002

COMPLEX
SINE WAVE

1101

1102

$Z^{-1}$

MODULO($2\pi$)

1104      1103

FROM ORTHOGONAL
CODE A SUPERIMPOSER

TO STFT UNIT

COMPLEX
MULTIPLICATION

**FIG. 14**

# FIG. 15

FIG. 16

EP 3 301 470 A2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3643871 B
- JP 5631763 B
- JP 3460586 B

**Non-patent literature cited in the description**

- **KENSHI SAHO ; MASAO MASUGI.** Velocity/shape estimation algorithm using tracking filter and data fusion of dual Doppler radar interferometers. *International Journal of Computer and Electrical Engineering,* October 2015, vol. 7 (5), 283-295